(19)

Europäisches
Patentamt
European
Patent Office
Office européen
des brevets

(11) **EP 2 503 774 A1**

(12) **EUROPEAN PATENT APPLICATION**
published in accordance with Art. 153(4) EPC

(43) Date of publication:
**26.09.2012 Bulletin 2012/39**

(21) Application number: **10831339.6**

(22) Date of filing: **18.11.2010**

(51) Int Cl.:
**H04N 5/243** *(2006.01)*      **H04N 5/232** *(2006.01)*

(86) International application number:
**PCT/JP2010/006776**

(87) International publication number:
**WO 2011/061940 (26.05.2011 Gazette 2011/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.11.2009 EP 09176379**

(71) Applicant: **Panasonic Corporation
Kadoma-shi
Osaka 571-8501 (JP)**

(72) Inventors:
• **WEDI, Thomas
63225 Langen (DE)**

• **KNICKER, Florian
63225 Langen (DE)**
• **PALFNER, Torsten
63225 Langen (DE)**
• **WITTMANN, Steffen
63225 Langen (DE)**

(74) Representative: **Grünecker, Kinkeldey,
Stockmair & Schwanhäusser
Leopoldstrasse 4
80802 München (DE)**

(54) **IMAGE PROCESSING METHOD, AND IMAGE PROCESSING DEVICE**

(57) The image processing device includes: a specular reflection detector (1110) configured to detect, in a first image, an enlarged region including a saturated region and an adjacent region, the saturated region being a pixel region having a pixel value equal to or larger than a predetermined threshold, and the adjacent region at least partially surrounding the saturated region; and a replacement unit (1130) configured to replace a pixel value of a pixel included at least in the adjacent region, with one of (i) a pixel value of a pixel in a region of a second image that is located at a position corresponding to a position of the enlarged region in the first image and (ii) a pixel value of a pixel adjacent to the pixel in the second image, the adjacent region being included in the enlarged region detected by the specular reflection detector (1110).

FIG. 11

**Description**

[Technical Field]

The present invention relates to an image processing method and an image processing device for compensating a region with saturated pixel values and a region with a false color.

[Background Art]

In various imaging applications, an effect called specular reflection may cause the occurrence of glare spots (bright spots) within a captured image. Such bright spots mask the structure of the captured scene, resulting in loss of details and thus in a reduction of the visibility of such a captured image.

Assuming the bright spots in the captured image as pixel values, the values are saturated. For example, when each of pixels in a gray-scale image is represented by 8 bits, the pixel values can range from 0 to 255. Here, the bright spots are represented by 255 or a value closer to 255.

During the process of imaging, a sensor captures light reflected from the scene to be captured. In general, the term "light" does not necessarily refer to the light in the visible range. It may be any kind of an electromagnetic wave. The term "specular reflection" typically refers to the reflection of light coming from essentially the same direction, wherein a major part of this light is reflected by the surface of the captured object into and essentially the same direction. The term "reflection" refers to a change in direction of a wave-front of a light beam at an interface between two different materials, wherein the angle at which the wave is incident on the surface equals the angle at which it is reflected. The occurrence of the specular reflections depends on the properties of the captured surface and the characteristics and position of the light source relative to the captured surface. In particular, glossy materials, which reflect light to a large extent, such as wet surfaces may, when captured, lead to the origination of glare spots. Especially in cases with a point-like light source, intense beams of light falling on the glossy surface may be reflected in the same direction, causing extremely bright spots in the image captured in such circumstances.

There are many examples where the specular reflection deteriorates the quality of the captured images. The effect of specular reflection may be observed, for instance, on the surface of water reflecting the light coming from the sun. Specular reflection also occurs in the photographing of documents printed on glossy paper, or when photographing glass surfaces such as faces wearing glasses, windows or mirrors. An unpleasant consequence of the specular reflection is the loss of information occluded by the bright spots. Such loss of information may be annoying for the persons viewing such a captured image. Moreover, specular reflections may cause serious problems in applications such as document photographing. In particular, the text or pictures of the photographed document may be occluded by the specular reflections, causing the photographed document to be incomplete.

Furthermore, the same effect as the specular reflection occurs when a mixed scene of a bright portion and a dark portion is captured. For example, when an image including both a view in a room and a view outside of the window is captured from the room, the pixel values of a portion outside of the window are saturated because the brightness outside of the window is much higher than that of the room.

Another field where specular reflections may lead to serious problems is medical imaging. One popular medical imaging application is endoscopy. The term "endoscopy" refers to imaging of the areas inside the body for medical reasons. The results of endoscopy, i.e. the captured images and/or video sequences, are used for supporting a diagnosis and surgery. Endoscopy is typically performed by an endoscope which may comprise regular flexible tube, a light source for illuminating the area inside a body to be viewed, and a detector such as a camera for capturing the desired area. The light is typically introduced into the body via an optical fiber from a light source that may be connected to the endoscope outside the body. The images captured via endoscopy are particularly susceptible to specular reflections. This is caused on one hand by mainly wet and thus highly reflective surfaces being an object of the endoscopy. On the other hand, the light source for illuminating the inside of the body has mainly a point characteristic resulting in a beam of light illuminating a surface coming from essentially the same direction and resulting thus in a reflection of the beam of light in another essentially same direction.

The bright spots resulting from specular reflections during the endoscopy significantly degrade the image quality. In particular, in the over-saturated bright spot areas, there is no image information and consequently abnormalities could be missed by the physician during examination of the captured images. Secondly, the endoscope is typically in a relative movement with respect to the captured object. This is caused by a possible random or controlled movement of the endoscope itself and/or by the movement of the scene caused, for instance, by the patient's respiration cycle or heart beating. This permanent movement results also in a corresponding movement of the glare spots caused by the specular reflections. The moving bright spots on a display of an endoscopy device disturbs the physician in his diagnosis and surgery, and may distract his attention in particular in case of operations performed under use of endoscopy.

In order to compensate for specular reflections, PTL 1 discloses employing two light sources in an apparatus for the detection of cervical cancer. The bright spots caused by the specular reflection are removed by combining images captured using the different light sources resulting in different illumination and consequently, in different positions of the bright spots within the image.

PTL 2 relates to reducing the specular reflections in photographed documents by combining images from a plurality of differently positioned cameras.

[Citation List]

[Patent Literature]

[PTL 1] US Patent 6,088,612
[PTL 2] US Patent Application No. 2008/0165266

[Summary of Invention]

[Technical Problem]

One of the disadvantages of these prior art solutions is the increased complexity and price of such devices due to doubling of the light sources or light detectors. The prior art solutions make use of an additional information resulting from the known positioning of the two light sources or light detectors. Thus, the specular reflection compensation is also specific for the capturing system and cannot be applied to images captured by other systems.

The object of the present invention is to cope with the above mentioned problems and to provide an image processing method and others to efficiently reduce the effect of specular reflection in a saturated region with saturated pixel values.

[Solution to Problem]

This is achieved by the features as set forth in the independent claims.

Preferred embodiments are the subject matter of the dependent claims.

It is the particular approach of the present invention to replace at least parts of a specular reflection region in a target image with an image region from a reference image, wherein the replacement image region is determined by estimating the position of the specular reflection region in the reference image based on matching of an image region surrounding the specular reflection region with the reference image.

According to an aspect of the present invention, an image processing method includes: detecting, in a first image, an enlarged region including a saturated region and an adjacent region, the saturated region being a pixel region having a pixel value equal to or larger than a predetermined threshold, and the adjacent region at least partially surrounding the saturated region; and replacing a pixel value of a pixel included at least in the adjacent region, with one of (i) a pixel value of a pixel in a region of a second image that is located at a position corresponding to a position of the enlarged region in the first image and (ii) a pixel value of a pixel adjacent to the pixel in the second image, the adjacent region being included in the enlarged region detected in the detecting.

Preferably, the image processing method further includes estimating the corresponding position of the region in the second image by searching the second image for an image region that matches a surrounding region that at least partially surrounds the enlarged region detected in the detecting, wherein in the replacing, the pixel value of the pixel included at least in the adjacent region is replaced with a pixel value of a pixel at the corresponding position of the region in the second image estimated in the estimating.

According to another aspect of the present invention, an image processing device includes: a detecting unit configured to detect, in a first image, an enlarged region including a saturated region and an adjacent region, the saturated region being a pixel region having a pixel value equal to or larger than a predetermined threshold, and the adjacent region at least partially surrounding the saturated region; and a replacement unit configured to replace a pixel value of a pixel included at least in the adjacent region, with one of (i) a pixel value of a pixel in a region of a second image that is located at a position corresponding to a position of the enlarged region in the first image and (ii) a pixel value of a pixel adjacent to the pixel in the second image, the adjacent region being included in the enlarged region detected by the detecting unit.

Here the term "a specular reflection region" refers to a region of bright spots in an image captured by a camera, the bright spots being caused by reflections of light on a flat surface. The "specular reflection region" is an aspect of a saturated region.

The first and second images may be a part of a video sequence including images captured at different time points. Furthermore, it may also be a plurality of images captured by a plurality of cameras at the same time point. The present invention is applicable to any set of images capturing essentially the same scene or object. It may be a combination of temporally and spatially distinct images, for instance a video sequence taken by a stereo camera, etc. Here, the first image may be identical to the second image.

Preferably, the estimating determines in the first image a surrounding region as an image region surrounding at least partially the detected specular reflection region (enlarged region), and searches the second image for image regions matching the surrounding region and appropriate for replacing the specular reflection image region (enlarged region) in the first image. The suitability may be measured by predetermined criteria. After the matching, from among the searched image regions the best candidate is selected for replacing the specular reflection image region (enlarged region). The surrounding region may be, for instance a boundary or a part of a boundary of the detected specular reflection region (enlarged region). The boundary may be one or more pixels thick and may be selected to fit in a predefined geometric structure such as a rectangle, a triangle, a hexagon, or any other shape. For instance, a shape may also be a copy of the shape of the specular image region (enlarged region) and include a boundary with a thickness of a predefined amount of pixels.

Preferably, the predetermined criteria include in particular at least one of the following criteria: an amount of saturated pixels in the searched image region, mean brightness of the searched image region, an amount of spatial information of the searched image region, an amount of noise of the searched image region, smoothness of a transition region between the searched image region and the detected surrounding region, or a temporal distance between the first and the second images, and a perspective distance between the views of the first and the second images (for instance, a baseline distance in a multi-view setup). These criteria may be used individually or in combination in order to select the most suitable candidate for a given reference image for a replacement of the specular reflection region (enlarged region) in the target image. The spatial information refers, in general, to an amount of edges (structure) in an image. It may be detected by means of a variance of the searched image region, or by means of edge detection, or by any similar method. The amount of spatial information corresponds to and can be represented and/or measured as frequency information, an amount of structure, and/or an amount of texture. Other criteria for suitability of the replacement region may be used, such as relative motion of the specular reflection (enlarged region) and the motion of the surrounding region.

The image processing method of the present invention is advantageously applied to detect possibly more than one specular reflection regions (enlarged regions) in the target image (the first image) and the estimating and replacing are also performed for each of the detected specular reflection regions (enlarged regions). Preferably, the estimating is further repeated for a plurality of reference images (the second images), the plurality of reference images including images of a video sequence or images captured by a plurality of cameras.

Preferably, the detection of the specular reflection image region(s) is performed by detecting saturated pixels in the first image. This may be performed, in particular, by classifying of each pixel of the first image as saturated or as non-saturated. A pixel is classified as saturated if its value exceeds a predefined threshold and classified as not saturated otherwise. The detection further includes identifying a specular reflection image region (saturated region) or a plurality thereof by grouping adjacent pixels classified as saturated pixels. The grouping may further comprise including into the group of pixels classified as saturated also the pixels which are classified as non-saturated, but which are surrounded by a predefined number of pixels classified as saturated. This enables detection of more compact and continuous specular reflection regions (saturated regions). The identified specular reflection region (saturated region) may further be enlarged in order to cover also possible corona-like artifacts (false color region) that may occur in the proximity of the specular reflection boundary. The enlargement may be performed, for instance, by the morphological image operation of dilatation or by any other similar operation/filtering. For instance, the boundary may be automatically extended by one or several pixels.

Preferably, the replacement of the specular reflection region includes selecting a replacement region for replacing a specular reflection image region in the first image from among a set of candidate replacement regions, adapting the brightness of the selected replacement region to the brightness of the first image, and replacing the specular reflection image region with the adapted replacement region. The set of candidates may, in particular, include the best replacement candidates from different reference images. Apart from the brightness adaptation, a smoothing of the transition region between the target image and the replacement region may be performed.

The present invention is applicable to any imaging application where specular reflections may occur. This may be a photographing with a still/video camera, microscopic photography, medical imaging such as endoscopy, photographing of documents, etc.

In accordance with yet another aspect of the present invention a system is provided for performing endoscopy, the system including: at least one light source for illuminating an object to be captured; at least one camera for capturing a plurality of images of the illuminated object; an endoscope for positioning at least an optical part of the camera in the proximity of the object to be captured; and the specular reflection compensator as described above for detecting and reducing specular reflections in the captured plurality of images. The endoscopy system may further include an output unit for outputting the compensated images. Here, the output unit may be a display or storage. The optical part of the camera here refers to a means through which light enters to the camera sensor. The camera sensor may be located at the front of the endoscope. Alternatively, the light may be transported to the camera sensor by an optical fiber.

In accordance with still another aspect of the present invention, a computer program product including a computer-readable medium having a computer-readable program code embodied thereon is provided, the program code being adapted to carry out the present invention.

[Advantageous Effects of Invention]

According to the present invention, the influence of a saturated region with saturated pixel values, such as the effect of specular reflections, can be efficiently reduced.

[Brief Description of Drawings]

[FIG. 1] FIG. 1 is a picture of an example of an endoscopic image with specular reflections (Source: taken from Wikipedia, http://en.wikipedia.org/wiki/File:Am_ulcer.gif).
[FIG. 2] FIG. 2 is a flow diagram of a method of reducing specular reflections according to the present invention.
[FIG. 3] FIG. 3 is a flow diagram of an example method of detecting a specular reflection region in an image according to Embodiment 1 of the present invention.
[FIG. 4] FIG. 4 is a schematic drawing illustrating displacement estimation according to Embodiment 1 of the present invention.
[FIG. 5] FIG. 5 is a flow diagram of an example method for displacement estimation applicable for specular reflection reduction according to the present invention.
[FIG. 6] FIG. 6 illustrates a flow diagram of an example of a method of replacing a specular reflection region.
[FIG. 7] FIG. 7 is a schematic drawing illustrating replacement of a specular reflection region according to Embodiment 1 of the present invention.
[FIG. 8] FIG. 8 illustrates a transition region between (i) a replacement region in a reference image and (ii) a region around a specular reflection region to be replaced in a target image.
[FIG. 9] FIG. 9 is a schematic drawing illustrating an example of performing brightness compensation.
[FIG. 10] FIG. 10 is a schematic drawing illustrating an example weighting function to be applied for smoothing a transition region between an image region for replacing a specular reflection region and its adjacent region.
[FIG. 11] FIG. 11 is a block diagram illustrating functional blocks of a specular reflection compensator according to the present invention.
[FIG. 12] FIG. 12 is a schematic drawing illustrating an endoscopy system to be applied in the present invention.
[FIG. 13] FIG. 13 is a block diagram illustrating a configuration of an image processing device according to Embodiment 2 in the present invention.
[FIG. 14] FIG. 14 is a flowchart of processes performed by an image processing device according to Embodiment 2 in the present invention.
[FIG. 15] FIG. 15 illustrates a method of detecting a false color region.
[FIG. 16] FIG. 16 illustrates a method of determining a boundary position of a false color region.
[FIG. 17] FIG. 17 illustrates processes performed on the first image.
[FIG. 18] FIG. 18 illustrates processes of interpolating a pixel value in a false color region.
[FIG. 19] FIG. 19 illustrates a result of a process of compensating a false color region.
[FIG. 20] FIG. 20 illustrates another result of a process of compensating a false color region.
[FIG. 21] FIG. 21 illustrates processes performed on the second image.
[FIG. 22] FIG. 22 is a block diagram illustrating a configuration of an image processing device according to Embodiment 3 in the present invention.
[FIG. 23] FIG. 23 is a flowchart of processes performed by an image processing device according to Embodiment 3 in the present invention.
[FIG. 24] FIG. 24 illustrates a method of selecting the second image.
[FIG. 25] FIG. 25 is a block diagram illustrating a configuration of an image processing device according to Embodiment 4 in the present invention.
[FIG. 26] FIG. 26 is a flowchart of processes performed by an image processing device according to Embodiment 4 in the present invention.
[FIG. 27] FIG. 27 illustrates a method of selecting the second image.

[Description of Embodiments]

(Embodiment 1)

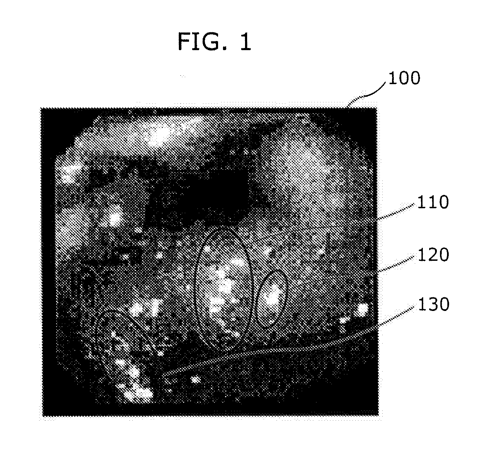

FIG. 1 shows an example of an image 100 captured using an endoscopy device (an endoscope). As can be seen in the image 100, specular reflections form rather small saturated image regions such as, regions in the area 110, 120 and 130. Consequently, there is no useful information in the positions of the specular reflections.

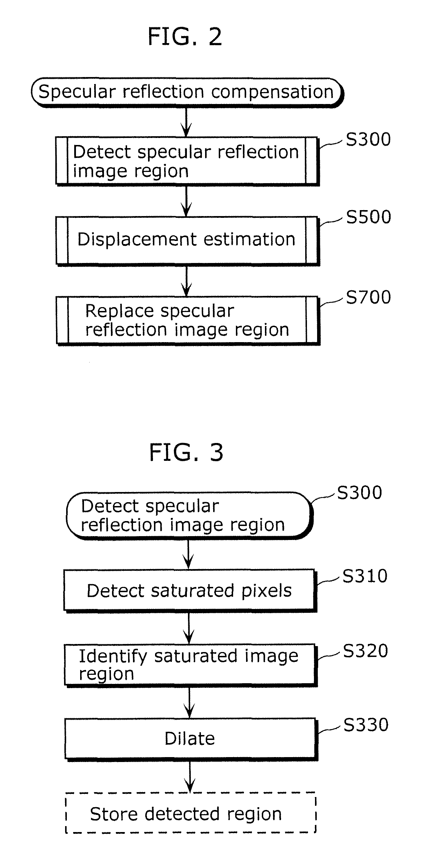

FIG. 2 is a flow diagram describing a method of detecting and reducing the specular reflections in a captured video sequence according to the present invention. The specular reflection reduction method of the present invention first detects a specular reflection region in the captured image (S300). In the next S500, another image or a plurality of images is searched for the regions corresponding to image regions covered by the specular reflection in the captured image. Finally, the specular reflection region in the captured image is replaced with the information from the one or a plurality of images (S700). Here, the image to be searched is an image in another frame temporally before or after the frame including the image in which the specular reflection regions have been detected.

FIG. 3 illustrates specular reflection image region detection in accordance with Embodiment 1 of the present invention (S300).

Accordingly, the detection of specular reflection regions is based on the observation that specular reflection effects appear typically in an image as a region with saturated pixel values such as the regions 110, 120, and 130 shown in FIG. 1. Thus in accordance with Embodiment 1 of the present invention, first the saturated pixels are detected (S310). In S320, neighboring pixels identified as saturated are connected to build a specular reflection region, which will be denoted as σ further in this document. The detection of saturated pixels (S310) may be performed, for instance, by comparing individual pixel values with a predetermined first threshold. Accordingly, the pixels with a value higher than or equal to the first threshold are classified as saturated. The term "pixel" here refers to image pixel values in a given color space. The detection of specular reflection may be performed in a single color channel such as a luminance channel in a color space like YUV or YCbCr. However, better results may be achieved if the saturated pixels are detected using more color channels. Alternatively, the detection may also be performed in a mean image obtained by averaging color component images such as R, G, and B of the RGB color space. By thresholding each pixel value of an image, a binary image may be obtained, in which ones denote pixels classified as saturated and zeros denote the remaining pixels (or vice versa). It may be advantageous to further process such a binary image due to simplicity and lower storage requirements for storing such a binary image in comparison to storing a copy of a luminance image.

After having classified the pixels of an image as either saturated or not, the saturated image regions are identified. Such identification of saturated image regions may be performed simply by connecting the pixels identified as saturated. In order to obtain possibly continuous saturated regions, various rules may be provided. For instance, a pixel classified as non-saturated may be appended to a saturated region σ if it is surrounded by at least $k$ pixels classified as saturated, k being an integer from the range [1, 8]. Advantageously, k is higher than 5 in order to include only non-saturated pixels which are prevailingly surrounded with pixels classified as saturated from at least three sides. Alternatively, it may be beneficial to provide a second threshold, during the step of detecting saturated pixels in S310, lower than the first threshold, for identifying as saturated also those pixels having at least one (or another number of) neighboring pixel which has already been identified as saturated and a value higher than the second threshold. Providing the second threshold enables detecting of specular reflection regions as continuous even if there are some slightly darker pixels in the texture of the specular reflection region.

Moreover, there may also be distorted image pictures and corona-like artifacts formed, around the borders of specular reflection regions. Therefore, it may be beneficial to include these surroundings into the detected specular reflection region. This may be performed, for instance, by applying a morphologic dilatation operation (S330) resulting in a correspondingly enlarged specular reflection region denoted S. The morphologic dilatation operation assigns to a pixel in an image the maximum value of pixels in its adjacent region. The adjacent region is typically defined as the left and right pixels, or as the top and bottom pixels. However, the adjacent region may be defined arbitrarily and may include more neighbouring pixels, or possibly all eight of them.

In general, not all saturated image regions originate necessarily from specular reflections. For example, in the case of endoscope images, fat in the human body is of white color and could be mistaken for a specular reflection. Any white objects in an image or a video sequence may be wrongly detected as a specular reflection region. Moreover, objects which are close to the light source may also appear oversaturated. Such areas within an image may advantageously be distinguished from the true specular reflections since they do not need to be compensated and thus a computational power is not unnecessarily spent. The displacement estimation and replacement of the present invention, however, should typically not result in replacing the false specular reflection regions, if the conditions and thresholds for selecting the candidates are designed well. In order to distinguish white regions in the image from saturated regions resulting of the true specular reflections, the features of the specular reflections' movement may be considered. In particular, a specular reflection usually moves in front of the background, when there is motion in the scene. Even if the amount of motion is rather small and the reflection cannot be completely compensated with data from adjacent frames, the motion can be detected. In contrast to specular reflections, a white region belonging to the content of the image would not move in front of the background. The detection of this kind of motion enables an efficient way to distinguish specular reflections from white regions. Once a region is reliably classified (distinguished from white image regions) as a specular reflection region, it can be tracked temporally so that the classification does not have to be repeated for each frame.

Another example of saturated image regions other than the specular reflection regions are image/video overlays such as a text, a time stamp, a logo, etc. If the overlay includes a white color area, it may be wrongly detected as a specular reflection. However, overlays have several particular features, which may be utilized in order to distinguish them from the true specular reflection regions. Some of these features are also true for a general white region in an image. For instance, the number of white pixels in an overlay is typically much greater than the number of pixels of a specular reflection. Moreover, an overlay is completely independent of motion in the scene unlike the specular reflections. This may be used as mentioned above for a reliable classification of white regions in the image as either specular reflections or as image content, wherein the specular reflections may be tracked in the images following (or preceding) the image for which the classification has been performed. Furthermore, overlays have typically a characteristic shape. For instance, an OCR-like (Optical Character Recognition) detection of characters in the image may be applied to distinguish some types of overlays from the specular reflections.

The detected and possibly enlarged saturated regions S may be directly further processed (cf. displacement estimation (S500) and replacement (S700)) or may be stored in a buffer for further processing, depending on the data flow in the system implementing Embodiment 1 of the present invention.

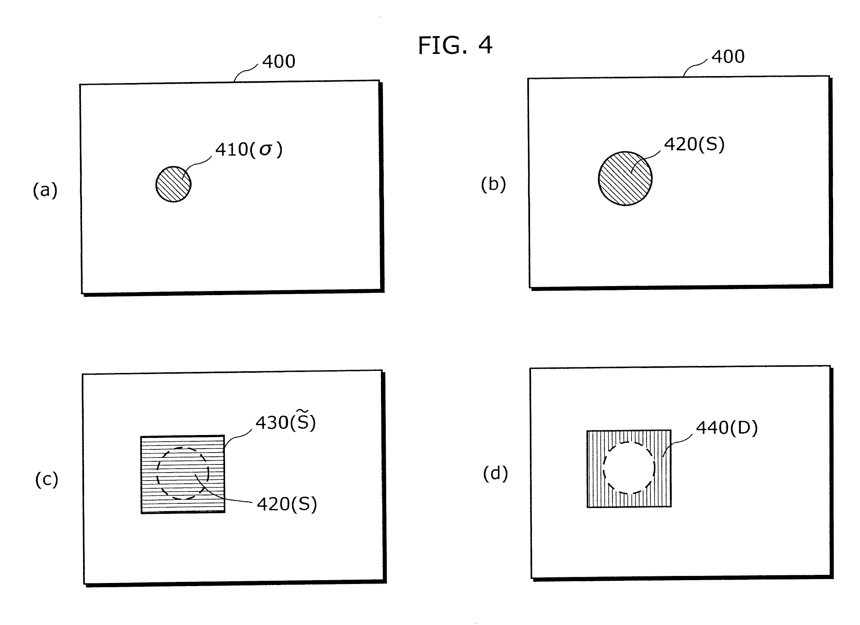

FIG. 4(a) illustrates a captured image 400 in which the specular reflection regions are to be detected. A specular reflection region 410 corresponds to the saturated region σ obtained after performing steps of detecting saturated pixels (S310) and identification of a saturated region (S320).

FIG. 4(b) shows the same captured image 400 with an enlarged specular reflection region 420 (enlarged specular reflection region S) obtained by a dilatation operation (S330). FIG. 4(a) and (b) only show one detected specular reflection region 410 and the resulting enlarged specular reflection region 420. However, typically, a single image contains a plurality of specular reflections, which would be detected and further processed either sequentially or in parallel. Here, Claims define, as an adjacent region, the region excluding the specular reflection region 410 from the enlarged specular reflection region 420.

As soon as the specular reflection regions 420 have been identified, these regions and/or the positions of these regions within the captured image 400 are stored. In particular, the detected specular reflection regions may be stored in a form of a bit map representing all pixels of the captured image 400 and having one binary value for pixels not belonging to any specular reflection region and having the other binary value for pixels belonging to the specular reflection region. Alternatively, the position within the captured image 400 and the shape and/or size of the specular reflection region may be stored. However, any other information which enables identification of the specular reflection regions may be used for storing as well.

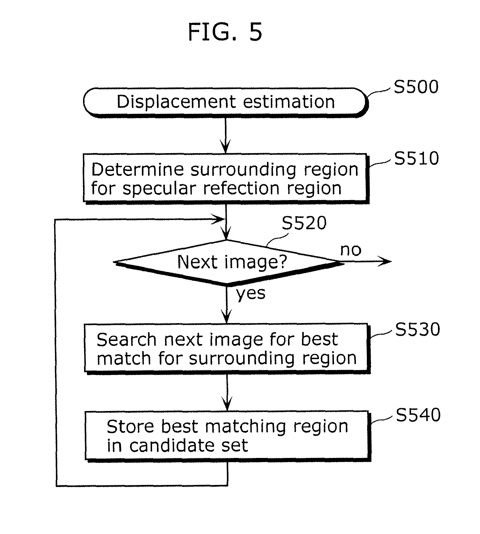

FIG. 5 illustrates a flow diagram of displacement estimation (S500) according to the present invention. The displacement estimation is performed for each of the detected specular reflection regions in the captured image through the process S300 (S500). The displacement estimation searches image regions in different frames, corresponding to the parts of the image occluded by the detected specular reflection regions. In order to facilitate this, for a given specular reflection region 420, a cover region 430 larger than the specular reflection region 420 and fully including the specular reflection region 420 is defined. This cover region 430 denoted by Math. 1 below may have, for instance, a block shape or any other geometry shape, such as a triangle.

[Math. 1]

$$\widetilde{S}$$

The cover region 430, having a shape of a rectangle and comprising the detected specular reflection region 420, is illustrated in FIG. 4(c). However, the present invention is not limited to the cover region 430 of these forms. In general, the cover region 430 may have an arbitrary shape, for instance, a shape copying the contour of the detected specular reflection region and having a thickness of a predefined number of pixels.

FIG. 4(d) illustrates a surrounding region 440 denoted as D and obtained as the cover region 430 without the specular reflection region 420. The surrounding region is defined as follows.

[Math. 2]

$$D := \widetilde{S} \setminus S$$

In other words, the surrounding region D represents those pixels surrounding the enlarged detected specular reflection region S, which fit to the cover region denoted by Math. 3.

[Math. 3]

$$\widetilde{S}$$

After having determined the surrounding region 440 for a specular reflection region 420 (S510), a reference image (frame) is read, if available, in the step S520. A reference frame is a frame other then the currently captured image (image in which the specular reflection region 410 has been detected). Then, the reference image read is searched for a best match with the determined surrounding region 440 cut from the captured image (S530).

Search of the best match (S530) may be performed similarly to a block matching performed for motion estimation in the majority of present video compression algorithms. In particular, it is assumed that the surrounding region 440 occurs in the captured image from which it is cut as well as in the reference image. This assumption typically holds for endoscopy images since an endoscopic diagnosis or operation is usually directed to a particular part of the body and its close surroundings, which can be reached by a flexible arm of the endoscope. This assumption is also typically valid for natural video sequences without fast scene changes. The aim of the displacement estimation (S500) is to find in a reference image, chosen from a plurality of images related to the same scene, the best match for the specular reflection surrounding region 440 from the captured image being a target image for specular reflection replacement. The matching region may be found by means of motion estimation. The motion estimation may be performed according to any approach, for instance based on optical flow. Some examples of such methods can be found in N. Paragios et al.(ed.) "Mathematical Models in Computer Vision: The Handbook", Chapter 15 by D.J. Fleet, Y. Weiss, "Optical Flow Estimation", pp. 239-258, Springer 2005, ISBN 0387263713. It may also be performed by minimizing sum squared differences in brightness or sum of absolute differences in brightness, or maximizing normalized cross-correlation. In order to facilitate this, in the reference image, a search region is defined in which the surrounding region of the specular reflection is looked for. Preferably, the search region surrounds a position corresponding to the position of the specular reflection within the captured image. The size of the search region may be fixed, or adaptable to the amount of motion between the reference frame (reference image) and the current frame (current image or captured image). In general, the search region may be formed by the entire reference image. However, in order to reduce the computational complexity necessary for the position estimation, a limited search region may be more advantageous. In order to find the best match, the surrounding region of the specular reflection from the captured image is shifted within the reference image and compared pixel by pixel to the content of the overlapping part of the reference image. In order to quantify the match, a similarity measure is used which may be based, for instance, on the sum of absolute pixel-wise differences. The sum of absolute differences (SAD) in brightness is, in fact, a measure of dissimilarity. The higher the similarity of the compared objects, the lower the sum of absolute differences. Other similarity and dissimilarity measures may equally be employed, such as mean squared error, various optionally weighted norms, correlation coefficient or any other measures expressing the level of (dis)similarity between the compared regions. The shifted position that yields the best match with the surrounding region 440 is then used as a candidate for the replacement for the specular reflection in the captured image. After the best match has been found, the information about the best matching region is stored in a candidate set (S540).

The mean squared error and the sum of absolute differences in brightness are measures typically used for block matching in the well-known codecs employing the motion estimation. However, for some applications, metrics (measurement reference) may be beneficial which are capable of penalizing jagged (stair-step) edges. This may be achieved by calculating, for instance, the mean squared error on Laplace filtered images and by combining the result with the standard mean squared error, for example, as the following weighted sum in Math. 4.

[Math. 4]

$$d(D, D') = \left\| D - D' \right\|_{\ell^2} + \gamma \left\| D * h - D'*h \right\|_{\ell^2}$$

Here, h denotes an impulse response of a high-pass filter, $\gamma$ is a weighting parameter, D' denotes a region compared with the surrounding region D, and * denotes the convolution operation. The high-pass filter in this example is a Laplace filter. However, any other high-pass filters are applicable as well. The effect of the jagged edges may be caused for instance, by aliasing or interlacing.

In general, the edges in the image carry the actual image information. The edges are typically expected to be continuous since this is the case of the majority of the typically scenes and objects captured in an image or by a video camera. Therefore, jagging (stair-step edge) is not only annoying (gives a negative effect) as an artifact, but it also distorts the captured information. In particular, in endoscopic images, the most important structures are typically the blood vessels, which can be distinguished in the captured image or a sequence of images as dominant edges. The edges also carry the most important information in captured texts as well as when capturing highly structured scenes such as city panoramas or objects with geometric textures. Therefore, it is important to evaluate the smoothness of edges during the displacement estimation. The smoothness of edges here refers to the smoothness in the direction along the edges, i.e. to continuousness of the edges.

In order to increase the robustness of the displacement estimation, a threshold $\delta$ may be defined. If a displacement detected of the specular reflection surrounding region D with respect to the matching area D' in the reference image is higher than the threshold $\delta$, which means d(D, D') > $\delta$, such a displacement is considered invalid and shall not be considered for the displacement compensation.

The repeated search of matching image regions in several frames leads to a set of candidate regions, which may be used to compensate the specular reflections.

The specular reflections may move continuously depending on the movement of the object being captured, and depending on the mutual position between the object to be captured, the camera, and the light source. Consequently, it may occur that the specular reflection region moves to its adjacent region and may become a part of the reference region D'. In such a case, the specular reflection part of D' has to be excluded from the error metric calculation. This is possible if the specular reflection image regions have also been detected in the reference image. Even if the specular reflection becomes a part of the matching surrounding region D', the corresponding replacement region S' may still be a good candidate for compensating at least partially the specular reflection image region in the target image.

For instance, in case of endoscopic images, the captured objects may posses a repeating pattern. This may also be the case for other images, for instance, for images of crystalloid structures, microscopic images, curled and waved objects (such as wavy water surfaces), or any objects with an essentially regular pattern. Consequently, the specular reflections may also occur in a kind of repeating pattern. In such a case, the search for the best match may deliver ambiguous results. For instance, a specular reflection region may be matched in the image with a similar but not corresponding specular reflection region. For example, assume that the target image includes three specular reflection regions A, B, and C, which can be found in the reference image as regions A', B', and C', respectively. Due to the mutual movement of the captured object(s), the camera, and the light source it may happen that for a specular reflection region A in the target image, the region B' in the reference image will be determined as the best matching region rather than the region A' in the reference image. In order to avoid this kind of ambiguity, a possible solution is to limit the size of the search region for the displacement estimation in such a way that it is smaller than the pattern period, the pattern period being the distance between the repeating parts of the picture. However, this may also diminish the quality of the displacement estimation.

Alternatively, in order to avoid this problem, the best match within the same frame may be searched, in order to detect the repeating pattern. The detected pattern may then be matched with a corresponding pattern in the reference image, resulting in resolved problem of ambiguity. Corresponding of the specular reflection regions in the target image with the specular reflection regions in the reference frames while taking into account the pattern of both the target and the reference images may improve robustness of the displacement estimation, for instance in applications, where the correctness of the replacement is important.

On the other hand, if the perceived image quality is more important than the correctness of the replacement, finding the best within the same frame may also provide a candidate for replacement. In such a case, the specular reflection region in the target image is replaced (at least partially) with a replacement area found in the same target image. Such a replacement may be employed, for instance, if there is no suitable candidate from the other images. However, this is only possible for applications, which are not sensitive to details. For instance, this approach may be used for replacing the specular reflection regions within endoscopic images during the operations, where the specular reflections are annoying and where the details may be updated in the upcoming images. However, it is not suitable to apply such a method for endoscopic imaging performed with a purpose of diagnosis. It may also be used, for instance, to improve the quality of natural images targeted for previewing or viewing. However, the employment of this method is not suitable for some surveillance applications or for replacing parts of a text.

For certain surfaces a specular reflection may lead to special cases of specular reflection patterns. For example periodically structured surfaces (like waves) may have specular reflections, which are periodically interrupted. This means that there is a specular reflection region σ with interruptions ($\rho \subset \sigma$). As the specular reflection moves, it may occur that the complementary interruptions region ρ becomes occluded by the specular reflection and the complementary part Cρ of the interruptions region becomes uncovered. In such a case the specular reflection may be completely compensated, even if the movement of the specular reflection is rather small.

The displacement estimation (S500) delivers a candidate set of regions within a plurality of images, the regions best matching the specular reflection surrounding region determined in S510. Once the candidate set is available, the specular reflection region in the target image may be replaced by one or a combination of the regions in the candidate set.

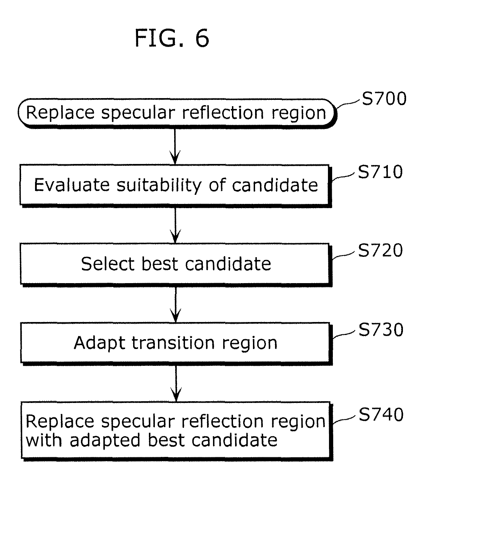

FIG. 6 illustrates a flow diagram of an example of replacing (S700) of a specular reflection region detected in S300 using the results of displacement estimation (S500). As a first step (S710), the suitability of the image regions candidate for replacement of the specular reflection region is evaluated and the best candidate (or candidates) is selected (S720). If necessary, the transition region between the replacement region from the reference image and the surrounding region of the target image is smoothed (S730). Finally, the specular reflection region in the target image is replaced with the adapted best replacement region (or a plurality of replacement regions) (S740).

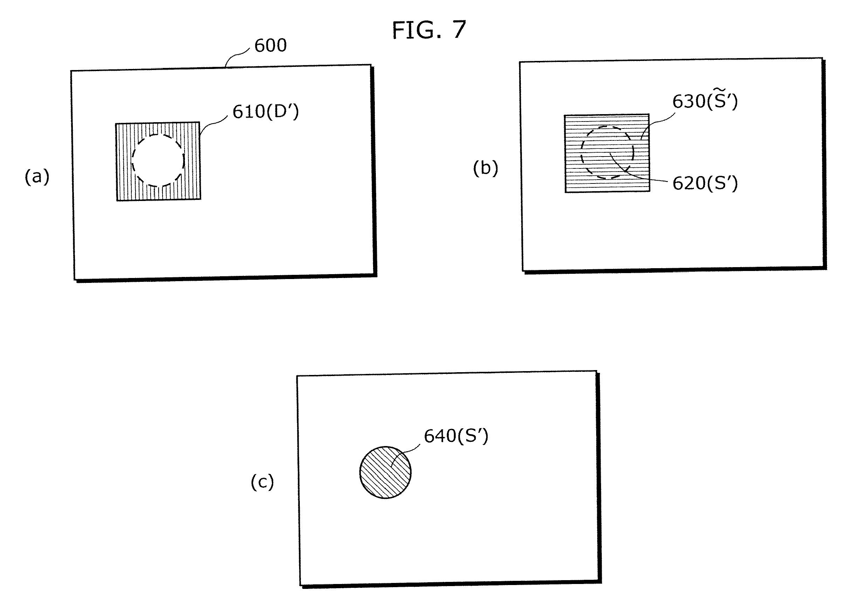

FIG. 7 illustrates schematically the procedure of replacing a specular reflection region in the captured (target) image with an appropriate region (replacement region) from a reference image. The specular reflection surrounding region D' (surrounding region 610) in the reference image 600 has been identified as the best matching to the surrounding region D of the target image from the set of candidates. Accordingly, a cover region 630 denoted by Math. 5 is identified, which includes the specular reflection surrounding region 610 and all pixels surrounded by this region.

[Math. 5]

$$\widetilde{S}'$$

The cover region 630 may be defined as a convex hull of D' and denoted as Math. 6.
[Math. 6]

$$\widetilde{S}' := \operatorname{conv} D' = \bigcap_{\substack{D' \subseteq K \\ K \text{ convex}}} K$$

After finding the cover region 630, the reference region (replacement region) S' may be cut out, which will be further used for replacing the specular reflection region in the target image.

In general, in order to replace the specular reflection regions in the target image, first the suitability of candidates is evaluated (S710). For the determination of the best candidate for the replacement of specular reflection region S (enlarged specular reflection region 420) by the region (replacement region) denoted by Math. 7 from one or a plurality of reference images, several criteria may be taken into account individually or combined.

[Math. 7]

$$S' := \widetilde{S}' \setminus D'$$

In the following, some examples of such criteria are provided.

Typically, the specular reflections occur in many consecutive frames. Therefore, the best reference region for replacement has to be chosen such that it includes possibly no specular reflections. For instance, the number of saturated pixels in the candidate replacement region S' may be counted. If it is zero, the reference region (replacement region) S' may be used as a reference. However, also in the case, where the number of saturated pixels is not zero, at least parts of the replacement region may be used. In order to select the best candidate region, the region S' may be selected which has the smallest number of saturated pixels. The remaining saturated pixels may be, for instance, replaced by pixels from other candidate regions, or spatially interpolated.

The best candidate may be chosen as the one having the best image structure. Such a selection of this candidate allows recovering most of the details of the captured image mapped by the specular reflection. The variance of the candidate replacement region S' may be taken as a measure of the amount of structure in S'. Then, the candidate region with the maximum variance is chosen for compensating the specular reflection region S.

Furthermore, the (mean) brightness of S' may be evaluated. If the mean brightness of the replacement region S' from the reference image is similar to the mean brightness of the surrounding region D of the specular reflection region in the target image, which means that $|\mu S' - \mu(D)| < \delta$, then S' may be selected for compensating for the specular reflection. If several candidates satisfy this criterion, the one which is temporally closest to S may be selected. However, this criterion may not be suitable in all scenarios. For instance, assume that the camera remains at one spot and then moves very fast causing motion blur (subject shake) and moves back slowly to the same spot. Thus, alternatively, a region spatially closest to S may be selected. This may be, for instance, a region taken with a camera having the smallest distance from the camera taking the image with the specular reflection in a multi-view camera setup. It may also be the region with smallest relative motion vector between the surrounding region and the specular reflection region.

Still alternatively, it is possible to select the best candidate of the replacement region, that is, the replacement region including the surrounding region *D'* of which has the smallest difference in brightness (that is, $|\mu(D) - \mu(D')|$) from the surrounding region *D* in the target image. Alternatively, the candidate may be selected, the surrounding region *D'* of which in the reference image provides the best match of the surrounding region *D* in the reference image, namely, the following Math. 8 may be selected.

[Math. 8]

$$\arg\min\left\|D - D'\right\|_{\ell^2}$$

As a further criterion for finding the best candidate region for replacing the specular reflections, the amount of noise may be used. Accordingly, the noise of different candidate replacement regions S' from different reference images may be measured and compared. This is particularly advantageous if an automatic gain control (AGC) is activated. The automatic gain control is a mechanism enabling an automatic adaptation of the brightness of different images (frames) within the plurality of images, for instance, of the same video sequence. Such a mechanism is beneficial since in general the plurality of images may differ in brightness. The automatic gain control may be performed in real-time after capturing and before the application of the specular reflection region compensation of the present invention. However, after such an automatic gain control, the candidate regions from different frames may have the same brightness, but different noise levels. This is caused by the automatic gain control, which may produce the same brightness for a different illumination. In order to select the most correct candidate for the replacement, the candidate having the smallest amount of noise may be selected.

If no automatic gain control is employed before the specular reflection compensation, in general, brighter reference regions may be preferred over the darker reference regions in order to avoid brightening in a possible post-processing, since brightening in general amplifies the noise.

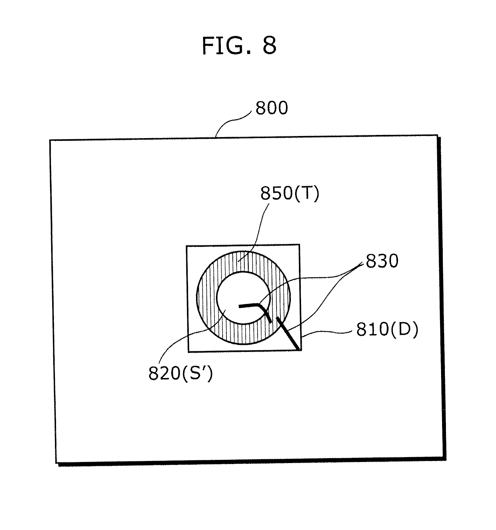

Another criterion for the best candidate selection may be the smoothness of the transition region between the reference region (replacement region) S' for replacing the specular reflection region S in the target image and the surrounding region D. FIG. 8 illustrates an image 800 with a specular reflection replacement region 820 and a surrounding region 810. The smoothness between the replacement region 820 from the reference image and the surrounding region 810 of the specular reflection region in the target image may be evaluated by a high-pass filtering of a transition region T (transition region 850) including a part of the replacement region from the reference image and a part of the adjacent region of the specular reflection region to be replaced in the target image. As the best candidate, the reference region (replacement region) S' may be selected, which has the smallest transition energy in the filtered transition region. This corresponds to selecting a region possibly without any artificial jumps which may be caused, for instance, by brightness changes or jagged edges 830 as shown in FIG. 8.

Alternatively or in addition, the displacement vector of the specular reflection region S and the displacement vector of the surrounding region D may be calculated and compared. The displacement vector indicates the amount of displacement of a region from one image to another image, that is, it measures the distance between a position of a region in the target image and the position of the corresponding (matching) region in the reference image. The displacement vector may be obtained, for instance by binary (in a binary image representation) displacement search of the specular reflection region. This allows for reduction of computational power needed. If the difference between the displacement of the specular reflection region and the displacement of its surrounding area is bigger than the radius of the specular reflection region, the specular reflection region has likely been uncovered and can be advantageously used for specular reflection compensation. In the case where the specular reflection region is not fully uncovered in any of the plurality of available images, the image providing the highest displacement difference may be selected in order to allow at least partial specular reflection compensation. The remaining pixels may be spatially interpolated or replaced from other reference images, which means that the specular reflection region may be compensated by several reference regions each covering a different part of the specular reflection region. It may also occur that the specular reflection moves outside the search region or completely disappears in a consecutive frame, for instance, when the light source has changed. In such a case the length of the displacement vector is set to the maximal length and the specular reflection can be fully compensated by the corresponding image region.

For the evaluation of the best candidate, as a side condition it may also be penalized, if there is a large temporal distance between the surrounding of the specular reflection region S in the target image and the matching surrounding region in the reference image. This allows keeping replacement conditions updated and prevents from selecting, as a best replacement, irrelevant parts of the captured image/video sequence.

As soon as an uncovered replacement region for the specular reflection region is found in the reference frame, which satisfies the matching criteria, it may be utilized to replace the specular reflection region in the current (target) frame.

In order to adapt the replacement region to its new adjacent region, a preprocessing mechanism may be employed. In particular, it is advantageous if the transition region between the replacement region cut out from the reference frame and its new adjacent region in the target (current) frame is possibly smooth, while maintaining the directions and smoothness of the edges. In order to compensate for possible rotations, for instance, an affine transformation may be applied.

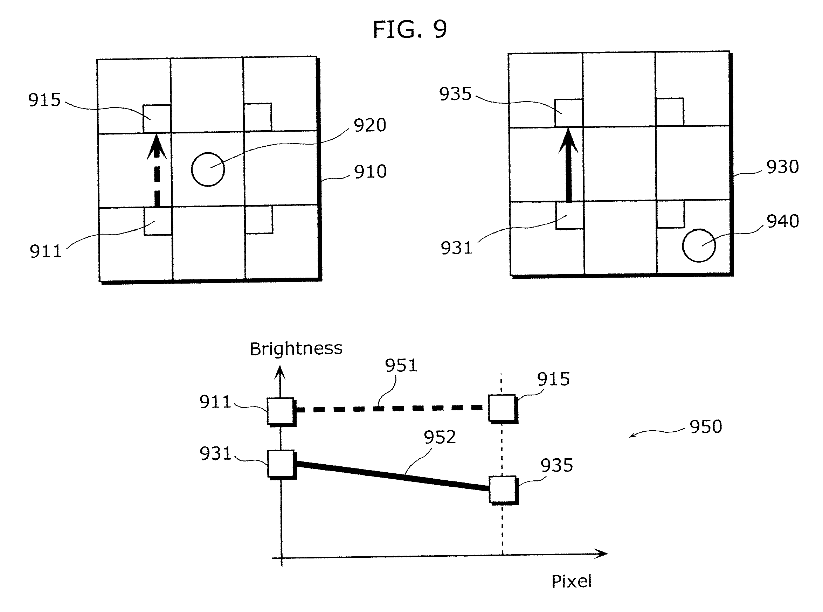

Even if the brightness difference has been considered as a criterion for selecting the best match, the brightness of the replacement region may still slightly differ from the surrounding region of the specular reflection region. This problem may be overcome, for instance, by adapting the brightness of the replacement region to that of the surrounding region by adding a constant luminance value or by adding a bilinear brightness function. An example of a compensation of brightness differences is illustrated in FIG. 9. FIG. 9 illustrates a target image 910 with a specular reflection region 920 and a reference image 930 with the corresponding displaced specular reflection region 940. Brightness compensation may be performed, for instance, by measuring the brightness of the pixels 911 and 915 in the target image and the pixels 931 and 935 in the reference image. These pixels may be on the outer (shown in the figure) or inner boundary of the specular reflection cover region in the target image and the uncovered replacement region in the reference image. A dashed arrow in the target image 910 illustrates a spatial change in brightness of the specular reflection cover region. A solid arrow in the reference image 930 illustrates a spatial change in brightness of the corresponding specular reflection replacement region. A graph 950 shows the measured pixels and the dashed line 951 and the solid line 952 connections corresponding to the dashed and solid arrows in the target image and the reference image. The lines 951 and 952 may be interpolated based on the measured pixels, and based on these interpolated values, a brightness compensation for all pixels of the replacement region may be performed.

Another possibility of improving the integration of the replacement region from the reference frame into the surrounding region of the specular reflection to be replaced in the target frame is filtering. For instance, optimal filtering may be employed to compensate possible sub-pixel displacement, noise, and/or motion blur. Optimal filtering may be performed, for example, by designing the filter as a Wiener filter and calculating the corresponding Wiener filter coefficients. In particular, the Wiener filter coefficient vector w is calculated as the solution of the linear equation system C = Aw, in which A represents autocorrelation of the specular reflection region surrounding region D, and C represents cross-correlation between the target surrounding region D and the reference surrounding region D'.

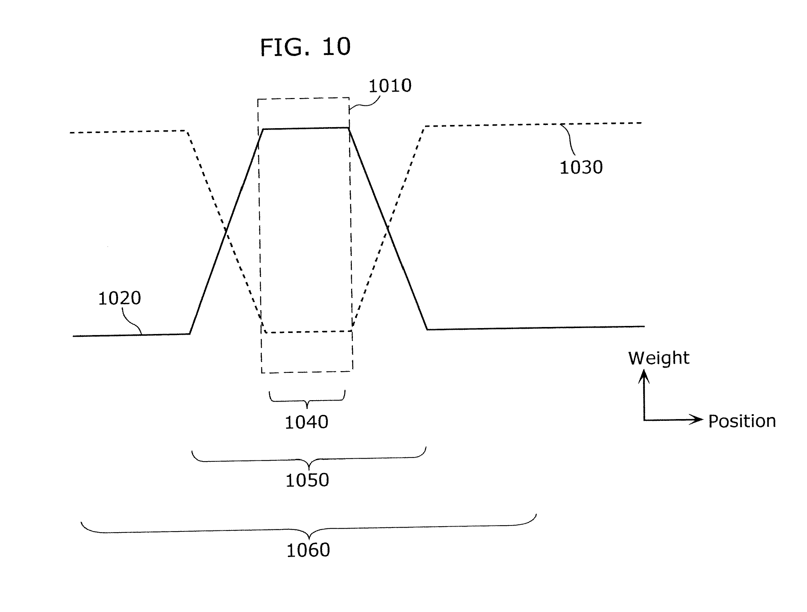

Alternatively or in addition, a weighting function may be applied to avoid abrupt transitions between the replacement region and its surrounding region. FIG. 10 shows such a weighting function 1030 to be applied to the replacement region or to the replacement cover region denoted by Math. 9 from the reference image, and a weighting function 1020 to be applied to the surrounding region or the cover region in the target image denoted by Math. 10.

[Math. 9]

$$\widetilde{S}$$

[Math. 10]

$$\widetilde{S}'$$

The horizontal axis of the weighting functions 1020 and 1030 indicates positions of one direction (for example, X direction) in an image, and the vertical axis indicates values of weight. The framed region 1010 in the FIG. 10 represents the specular reflection region σ with a width 1040. The width 1050 represents the width of the enlarged specular reflection region S, and the width 1060 represents the width of the cover region denoted by Math. 11 and including the adjacent region of the specular reflection region.

[Math. 11]

$$\widetilde{S}$$

In this example the weighting function is a piecewise linear function (function to be linear in each piece when divided into pieces). However, smoother functions such as a raised cosine, or any other weighting functions may be used, as well.

It may occur that a specular reflection can only be compensated partly by a temporally adjacent reference frame. In such a case, image regions from other frame(s) may cover the remaining parts of the specular reflection region.

The specular reflection compensation according to the present invention is, in general, based on compensating for the specular reflections in a first image with information from another single or a plurality of images. Thus, such a mechanism may be called an inter-picture specular reflection compensation. This mechanism is applicable as a temporal compensation mechanism. This means, that it is applicable for detecting and reducing the specular reflections in a sequence of images (video sequence) capturing essentially the same subject. Moreover, the present invention is also applicable for detecting and reducing the specular reflections in a plurality of images taken at the same time with different cameras. The two applications may be combined. For instance, a stereo camera may take a series of images. For reduction of specular reflections, both the images taken at the same time and the images taken before or after the target image may be used.

The stereo cameras are nowadays available not only to film producers, but also to public. Moreover, stereo cameras may also be deployed in the endoscopes. In such a case, the specular reflections can be compensated very easily, because there are always two different views of the same scene. In addition, typically, the geometry between the two views corresponding to the two captured images is known. The two views provided by the stereo camera may also be used for distinguishing between specular reflections and the other white areas in the image, based on the movement characteristic for the specular reflections. Moreover, if the relative position of the camera with respect to the light source is known, the specular reflections can be used to determine the surface orientation. On the other hand, if the position of the light source is not known, the depth and surface orientation may be estimated in order to predict the position of the light source. If the predicted position of the light source is the same for all specular reflections, it is likely that the saturated regions represent a true specular reflection.

In some applications and situations, it may be also beneficial to combine the inter-picture specular reflection compensation with an intra-picture (spatial) specular reflection compensation. The spatial specular reflection compensation is, for instance, a spatial interpolation of the specular reflection region. The interpolation may be performed as a (weighted) linear, cubic, directional (edge dependent) or any other interpolation. The interpolation type may be chosen in accordance with the characteristics of the image to be interpolated. Such a spatial specular reflection compensation replaces the specular reflection region with an image interpolated using the pixels surrounding the specular reflection region. The intra-picture and the inter-picture specular reflection compensation may also be combined. Switching between the inter-picture interpolation and the intra-picture compensation may be beneficial for applications aiming at a complete compensation of the specular reflections and that are not critical to truthfulness of the interpolated information.

In particular, switching from the inter-picture specular reflection region compensation to spatial interpolation may be beneficial if no appropriate reference region (candidate for a replacement) has been found in the available plurality of reference images for replacing the specular reflection region in the target image. Switching to the spatial interpolation may also be advantageous during the time periods in which the location of the specular reflection region does not change during a large number of frames. In such a case, no appropriate replacement region can possibly be found within a predefined time window. Furthermore, the switching to the spatial interpolation may be applied if the number of pixels of the specular reflection is very small, which means that the risk of missing an important detail is also low. A small spatial reflection region is, for instance, a region covering several pixels. The exact classification of a region as "small" in this context depends on application and the expected size of the smallest objects of importance and on the image resolution. The above mentioned example cases, for which a switching from inter-picture to intra-picture compensation may be beneficial, may trigger an automatic switching. Other cases may be considered as well. Alternatively, or in addition to that, the spatial interpolation may be an option which may be switched on and off by a user.

The above described specular reflection compensation approach may work for a plurality of captured images, independently of the way in which they have been captured and without any information about the image capturing system. For instance, the captured images may be different images in a video sequence. Alternatively or in addition, the captured images may be images that have been captured by photographing essentially the same scene/object at the same time. However, in case of a video sequence, when each frame is processed independently, it may occur that the temporal smoothness of the video sequence is disturbed. For instance, it may occur that in some video frames a specular reflection region is detected and compensated, while in the other frame(s) the compensation may have failed and the specular reflection region still may be present. This could cause a visible flickering. In the very worst case, the image quality after such compensation would be worse than without it. Moreover, in adjacent video frames, different reference regions may have been selected for reduction of the specular reflection region or the displacement estimation and/or replacement processing could have been performed slightly different for different video frames. This could also lead to a slight visible flickering. For instance, in the adjacent frames there may be the same specular reflection region once compensated using the displacement compensation (inter-picture) and the other time compensated with a spatial interpolation (intra-picture).

In order to improve the temporal smoothness, the knowledge of the temporal sequence of images may be used. For instance, each specular reflection may be tracked in time (from frame to frame). Then it may be ensured that a same method is applied for compensation of at least a minimal number of consecutive frames. If it is not possible to apply the same method for the minimum number of frames, the compensation may be automatically turned off in order to avoid flickering. For example, if temporal compensation cannot be applied for a certain number of frames, these frames may be spatially interpolated. If the spatial interpolation also cannot be applied for a certain number of frames, the specular reflection compensation may be turned off. The minimum number of frames, to which a method shall be applied, may be predefined. In general it may be selected with regard to a displaying frame rate so as to avoid the effect of flickering. For instance the minimum number of frames may be set such that their displaying time corresponds to a couple of seconds.

Video sequences captured by a video camera may be interlaced. For instance, also sequences taken by the endoscope are currently typically interlaced. In the case of an interlaced video sequence being an input to the specular reflection reduction method or apparatus according to the present invention, it may be advantageous to handle the individual image fields separately. In general, the present invention may be applied to the fields before upsampling to the full resolution. However, in such a case, a problem with jagged edges may occur due to the vertical downsampling of the fields. Alternatively, the specular reflection reduction method may be applied to the fields upsampled to the full resolution. The processing in such a case is more computationally expensive.

The specular reflections often occur, for instance, as a consequence of reflection from a wet surface. The light reflected from wet surfaces and/or glass materials is typically polarized. Therefore, in order to avoid or at least reduce the specular reflections, a polarizing filter may be employed before the recording (image capturing). The polarizing filter may be, for instance, in front of the light source or in front of the camera.

Moreover, light deflection plates similar to those used in some 3D displays could also be used to avoid or reduce specular reflections. For instance, US Patent 7265902 discloses such a 3D display. In particular, the technique described in US Patent 7265902 employs light deflection plates to separate the left and the right eye's views. The deflection plates refract the light. There is one deflection element for each pixel of the display. If the left and right eye's images are separated by even and odd pixels, the deflection elements can control the light rays in a way that only the even and odd pixels are seen by the left and right eye, respectively. Additionally to the present invention or independently therefrom, such deflection plates may be advantageously used to control the angle of the light rays of the light source in such a way that the specular reflections move slightly in order to ensure their different positions in different video frames. This, on the other hand enables compensation of specular reflections by combining such frames.

Advantageously, the compensation of specular reflections according to the present inventions could be switched off/on. For instance, in case of application of the present invention to real-time video captured by an endoscope, even if the compensation works perfect, physicians may sometimes prefer to see the original image data instead of the compensated version. Therefore the original image data should be available at any time, which means that it should be possible to switch on/off the compensation at any time.

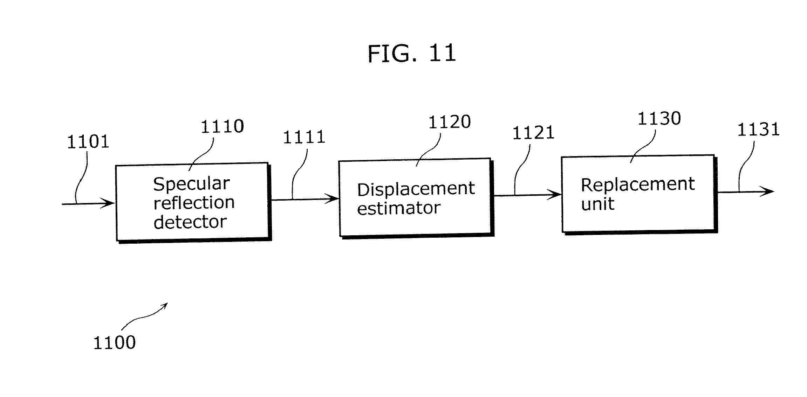

FIG. 11 illustrates functional units of a specular reflection compensator 1100 according to the present invention. An input signal (image signal) 1101 is input to the apparatus. This image signal 1101 may be a video sequence or a plurality of images captured of an essentially same object, for instance, by a stereo camera or by a plurality of cameras (e.g. camera array), or by a single camera at different time points and with different settings (such as light conditions). The specular reflection compensator 1100 includes a specular reflection detector 1110, a displacement estimator 1120, and a replacement unit 1130. The specular reflection detector 1110 is configured to detect specular reflections in the input image 1101. This detection may be performed as described above with reference to FIG. 3. The result of the detection 1111 is provided to the displacement estimator 1120. This may be, for instance, a bitmap of detected specular reflection regions, or any indicator of the position, shape and size of the detected specular reflection region(s). The displacement estimator 1120 is configured to search the best match for the detected specular reflection regions in a plurality of available reference frames, for instance, as described above with reference to FIG. 5. The plurality of available images here refers, for instance, to a predefined number of adjacent (previous or even following) frames of the input video sequence. The predefined number (a temporal search radius) may be pre-set with regard to the aimed application so that an appropriate candidate set may be found, and with regard to the computational complexity of the search as well as memory requirements for buffering the plurality of frames. However, the plurality of frames may also or alternatively include frames taken at the same time, for instance by a stereo camera or by a plurality of cameras, or any other images taken of the essentially the same object and scene. An output 1121 of the displacement estimator is then passed to the replacement unit 1130. This output is preferably a candidate set of replacement regions from different reference frames. The replacement unit 1130 then performs the actual replacement of the specular reflection region in the target image with the best candidate or more candidates from the candidate set of replacement regions produced by the displacement estimator 1120. An image signal 1131 with at least partially replaced specular reflection regions is output from the apparatus.

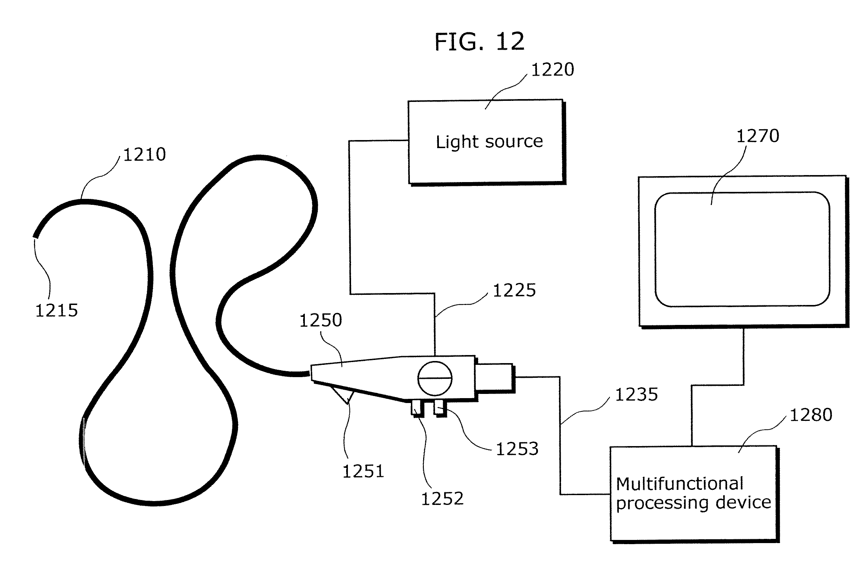

FIG. 12 illustrates an example of a system which may employ an apparatus according to the present invention. It is a system for performing an endoscopy. A flexible arm 1210 is connected to an endoscope body 1250. A light source 1220 generates light which is transferred via an optic fibre 1225 to the body of the endoscope and then over an optic fibre within the flexible arm 1210 to the object of the endoscopy. The light may be emitted by an optical fibre, and the light may be generated, for instance, by a xenon lamp or by LED(s). However, the light source may also be located on a distal end 1215 of the flexible arm 1210 (for instance, the light may be emitted by one or more LEDs). Medical instruments may be introduced to the flexible arm 1210 and through it to the object of the endoscopy via an interface 1251. For water and suction, connectors 1252 and 1253 may be used. Advantageously, the camera sensor is located at the front end of the endoscope. Alternatively, the camera sensor may be located within the endoscope body 1250 or may be connected thereto externally. The particular configuration of the endoscope depends on its aimed application. The present invention is not limited by a type and construction of the endoscope and may work on captured images even without knowing their source. Moreover, the present invention is not limited to specular reflections generated by the endoscopy imaging and may be used to reduce the specular reflections in any captured images. The camera sensor in this example is connected to the specular reflection compensator, which may be a part of a multifunctional processing device 1280. The endoscopic images processed in the specular reflection compensation are finally displayed on a display device 1270 and/or stored in storage of the multifunctional processing device 1280 or in an external storage. In the endoscopy, the light source is not necessarily attached directly to the endoscope. For example in laparoscopy, there may be a light source inserted in the abdominal cavity, which is independent of the endoscope including the camera. In such a case it may occur that there is no motion in the scene, but the light source is moving. Thus, specular reflections may be compensated by an adjacent frame without motion compensation.

Embodiment 1 can provide a method and an apparatus that reduces the effect of specular reflections in an image. In other words, a specular reflection region in the target image is detected, and then a reference image is searched for an appropriate replacement region by matching the reference image and the surrounding region around the detected specular reflection region. Furthermore, the detected specular reflection region is replaced with a replacement region in a single reference image or in a plurality of reference images.

Although Embodiment 1 describes an example of replacing the specular reflection region, the image region to be replaced is not limited to a specular reflection region. In other words, the specular reflection region may be replaced with a region with saturated pixel values.

(Embodiment 2)

While a specular reflection region is to be replaced in Embodiment 1, a saturated region that is an image region with saturated pixel values and a false color region around the saturated region are to be replaced in Embodiment 2.

The false color region is a region in which a blue false color appears around the saturated region with the saturated pixel values.

Although the following description mainly focuses on the differences with Embodiment 1, the description of the same processes as those in Embodiment 1 will be appropriately omitted.

The image to be processed in Embodiment 2 is a color image including RGB components, YUV components, or YCbCr components.

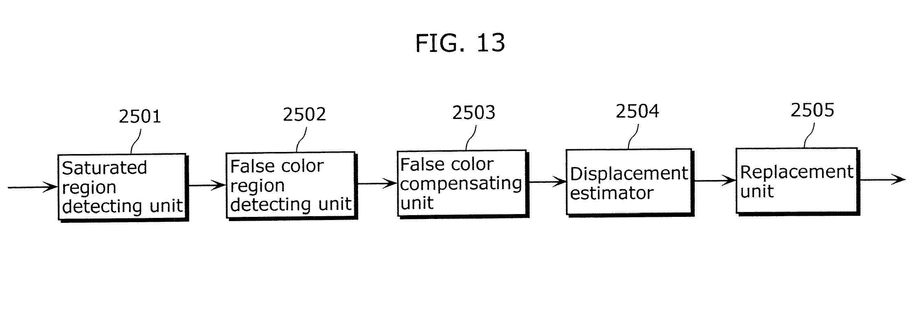

FIG. 13 is a block diagram illustrating a configuration of an image processing device according to Embodiment 2 in the present invention.

The image processing device according to Embodiment 2 includes a saturated region detecting unit 2501, a false color region detecting unit 2502, a false color compensating unit 2503, a displacement estimator 2504, and a replacement unit 2505.

The saturated region detecting unit 2501 detects a pixel region (saturated region) with saturated pixel values, from the first image (target image). Here, the saturated pixels may include not only a pixel having the possible largest pixel value but also a pixel having a pixel value equal to or larger than a predetermined threshold.

The false color region detecting unit 2502 detects, from the first image and as a false color region, a pixel region in which a blue false color appears around the saturated region with saturated pixel values.

The false color compensating unit 2503 interpolates, in the first image, a pixel value of a blue component (B, U, or Cb component) of a pixel included in the false color region, using pixels adjacent to the false color region.

The displacement estimator 2504 estimates a position of a region in the second image (reference image) that corresponds to the enlarged region in the first image, by searching the second image for an image region that matches a surrounding region that at least partially surrounds the enlarged region. Here, the enlarged region includes the saturated region and the false color region. Here, the second image is an image in a frame different from that of the first image.

The replacement unit 2505 replaces a pixel value of a pixel included in the saturated region detected by the saturated region detecting unit 2501, with a pixel value of a pixel in the second image that is located at the corresponding position of the enlarged region in the first image estimated by the displacement estimator 2504.

The processes performed by the image processing device will be hereinafter described with specific examples.

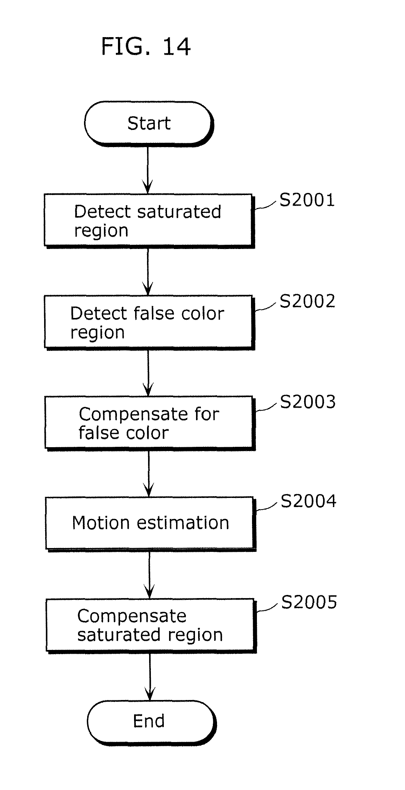

FIG. 14 is a flowchart of processes performed by the image processing device according to Embodiment 2 in the present invention.

The saturated region detecting unit 2501 detects a saturated region that is a pixel region with saturated pixel values, from the first image (S2001). In other words, the saturated region detecting unit 2501 classifies pixels each having the possibly largest pixel value or having a pixel value equal to or larger than a predetermined threshold as sutured pixels from among pixels included in the first image, and identifies a saturated region by grouping the pixels classified as the saturated pixels. In other words, the saturated region detecting unit 2501 detects a saturated region by performing the same processes as S310 and S320 in FIG. 3.

The false color region detecting unit 2502 detects, from the first image and as a false color region, a pixel region in which a blue false color appears around the saturated region with saturated pixel values (S2002).

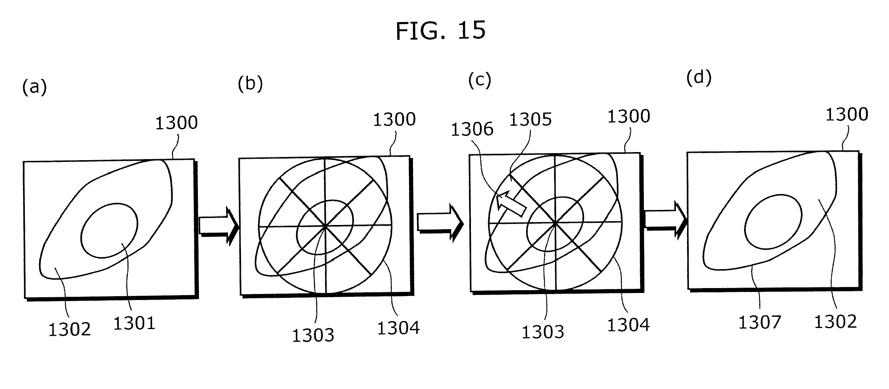

The method of detecting a false color region will be described in detail with reference to FIG. 15.

As illustrated in FIG. 15(a), it is assumed that a pixel value of a blue component is larger around a saturated region 1301 in a first image 1300 despite the fact that the region is not originally blue, and thus a false color region 1302 that looks blue appears. As illustrated in FIG. 15(b), the false color region detecting unit 2502 sets, on the first image 1300, regions 1305 obtained by radially separating a circle 1304 with respect to the center of the saturated region 1301. The center of the saturated region 1301 may be, for example, a barycentric position of the saturated region 1301. As illustrated in FIG. 15(c), the false color region detecting unit 2502 tracks a pixel value of a blue component in each pixel included in each of the regions 1305, from a center 1303 toward a radiation direction 1306 (direction distant from the boundary of the saturated region 1301). When tracking a pixel value of a blue component and after the pixel value becomes local maximum, the false color region detecting unit 2502 determines the false color region 1302 by determining a position at which the pixel value is equal to or smaller than a predetermined value as a boundary position of the false color region 1302. FIG. 15(d) illustrates an example of a boundary position 1307 of the determined false color region 1302.

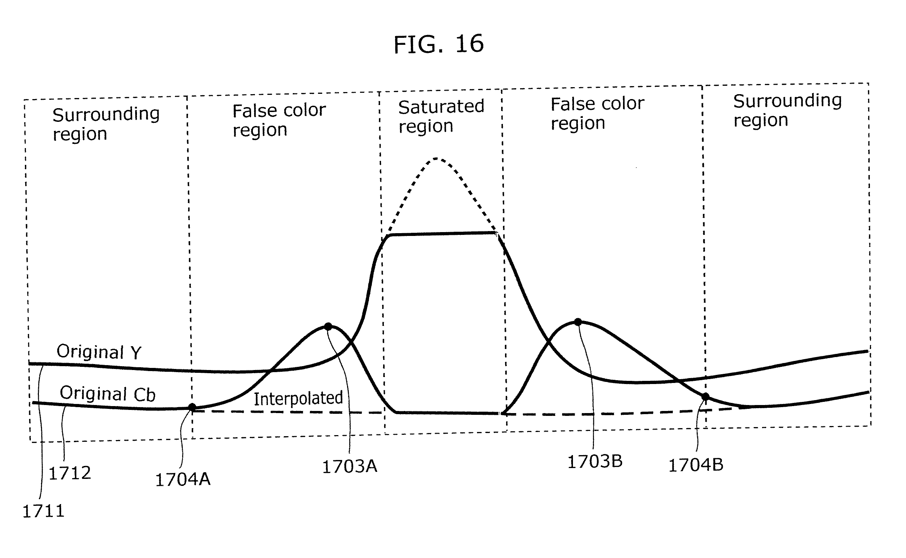

FIG. 16 illustrates a method of determining a boundary position of a false color region. In FIG. 16, the horizontal axis represents one-dimensional pixel positions in the first image, and the vertical axis represents pixel values. For example, the horizontal axis represents a radial direction that passes through the center 1303 of the saturated region 1301 in the first image 1300. As illustrated in FIG. 16, the saturated region is in the vicinity of the center of the horizontal axis, and the false color region is around the saturated region. Furthermore, the surrounding region is around the false color region. As indicated by a solid line, pixel values of a luminance component 1711 have been saturated in the saturated region. Furthermore, a Cb component 1712 corresponding to the blue component (chrominance component obtained by subtracting a luminance component Y from a blue component B) is 0 or closer to 0, because the luminance component Y and the blue component B have been saturated in the saturated region. Furthermore, pixel values of the Cb component 1712 are larger in the false color region with appearance of the blue false color. The false color region detecting unit 2502 tracks the pixel values of the Cb component 1712 from the boundary toward the outside of the saturated region. Then, the false color region detecting unit 2502 detects a local maximum value 1703A or a local maximum value 1703B of the pixel values of the Cb component 1712. Next, the false color region detecting unit 2502 detects a position of a pixel value 1704A or a pixel value 1704B that is a pixel value of the Cb component 1712 equal to or smaller than a predetermined value, and determines the position as the boundary position of the false color region.

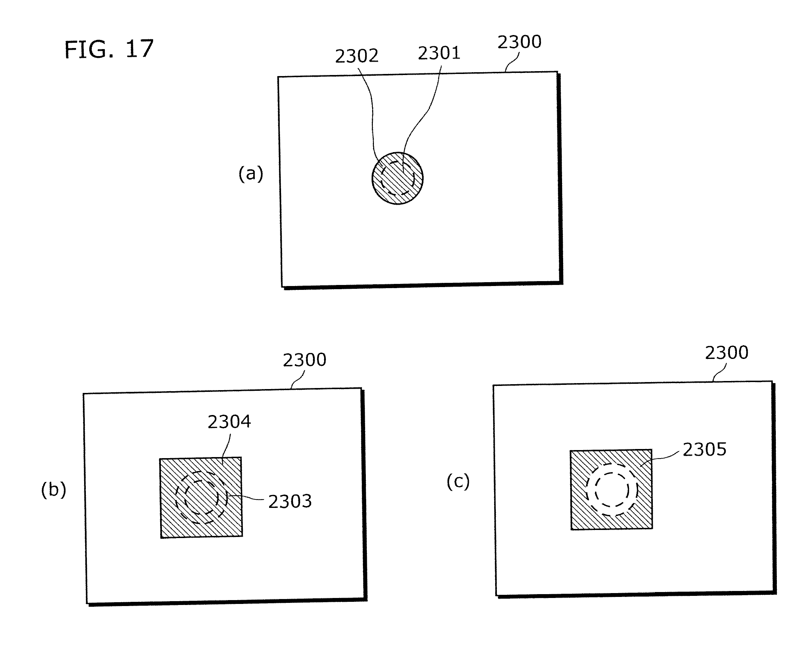

With the processes S2001 and S2002, the false color region detecting unit 2502 detects a saturated region 2301 and a false color region 2302 in a first image 2300 as illustrated in FIG. 17(a).

Again with reference to FIG. 14, the false color compensating unit 2503 interpolates, in the first image, a pixel value of a blue component included in the false color region, using pixels adjacent to the false color region (S2003).

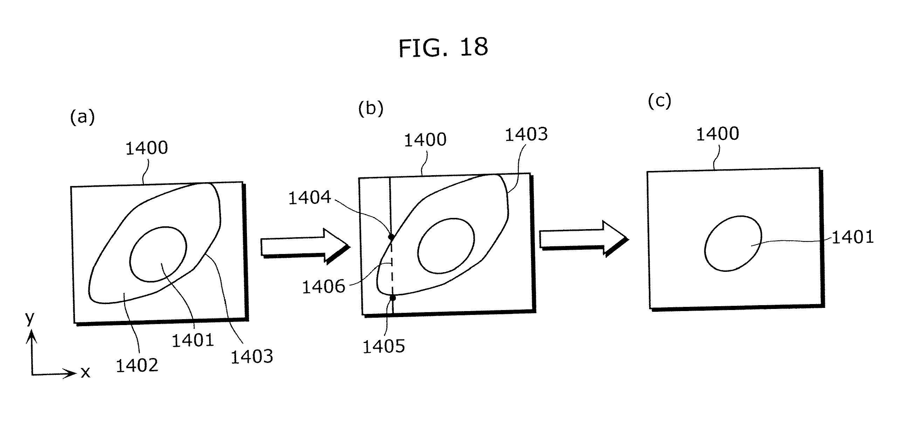

The process of interpolating a pixel value in the false color region (S2003 in FIG. 14) will be described in detail with reference to FIG. 18. As illustrated in FIG. 18(a), it is assumed that a saturated region 1401, a false color region 1402, and a boundary 1403 of the false color region 1402 are determined in a first image 1400. As illustrated in FIG. 18 (a), the false color compensating unit 2503 identifies pixels 1404 and 1405 which are adjacent to the boundary 1403 and have the same x coordinate, in the first image 1400. The false color compensating unit 2503 interpolates a pixel value of a blue component of a pixel 1406 at the same x coordinate and included in the false color region 1402, using pixel values of the blue components of the pixels 1404 and 1405. Thereby, the pixel values of the blue component of the pixel 1406 are replaced. The known technique is used as the interpolation method. For example, a pixel value of a blue component of a pixel between the pixels 1404 and 1405 may be calculated by connecting the coordinates of the pixel 1404 to the coordinates of the pixel 1405 in a line, in a graph where the horizontal axis represents the y coordinates, and the vertical axis represents pixel values of blue components. The false color compensating unit 2503 compensates the false color region by performing such a process on all the x coordinates. FIG. 18(c) illustrates an example of the first image 1400 after the interpolation, and a state in which the false color region disappears and only the saturated region 1401 remains.

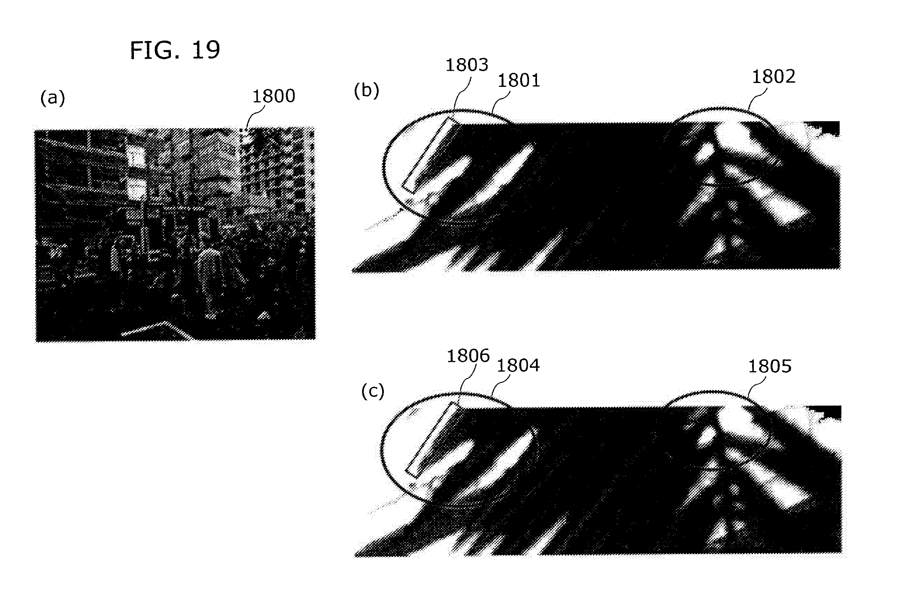

FIG. 19 illustrates a result of the process of compensating a false color region (S2003 in FIG. 14).

FIG. 19(b) illustrates an enlarged view of a region 1800 of the target image in FIG. 19(a). Regions 1801 and 1802 with a background of sky are saturated and appear as white. Thus, a false color appears in a boundary region between the leaves and the sky 1803, so that the color of the leaves appears as blue. With the process of compensating a false color region (S2003 in FIG. 14), an image as in FIG. 19(c) can be obtained. The false color has been compensated in regions 1804 and 1805 corresponding to the regions 1801 and 1802, respectively. Thereby, the color of the leaves has been compensated to be, for example, green in a boundary region between the leaves and the sky 1806.

Although the images in FIG. 19(a) to (c) are originally color images, they are represented in a gray scale for the explanation. Accordingly, it is difficult to distinguish the false color region before the compensation from that after the compensation. However, the aforementioned result of processes was obtained in the actual processing.

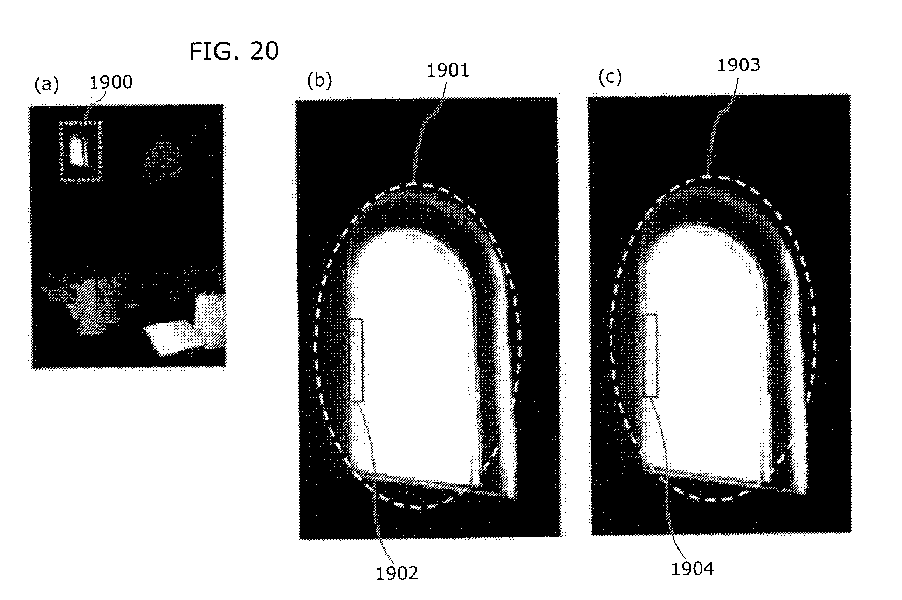

FIG. 20 illustrates another result of the process of compensating a false color region (S2003 in FIG. 14).

FIG. 20(b) illustrates an enlarged view of a region 1900 of the target image in FIG. 20(a). A portion of a window illustrated as a region 1901 is saturated and appears as white. Thus, a false color appears in a boundary region between the window and the window frame 1902, so that the color of the window frame appears as blue. With the process of compensating a false color region (S2003 in FIG. 14), an image as in FIG. 20(c) can be obtained. The false color has been compensated in a region 1903 corresponding to the region 1901. Thereby, the color of the window frame has been compensated to be, for example, the original color in a boundary region between the window and the window frame 1904.

Although the images in FIG. 20(a) to (c) are originally color images, they are represented in a gray scale for the explanation. Accordingly, it is difficult to distinguish the false color region before the compensation from that after the compensation. However, the aforementioned result of processes was obtained in the actual processing.

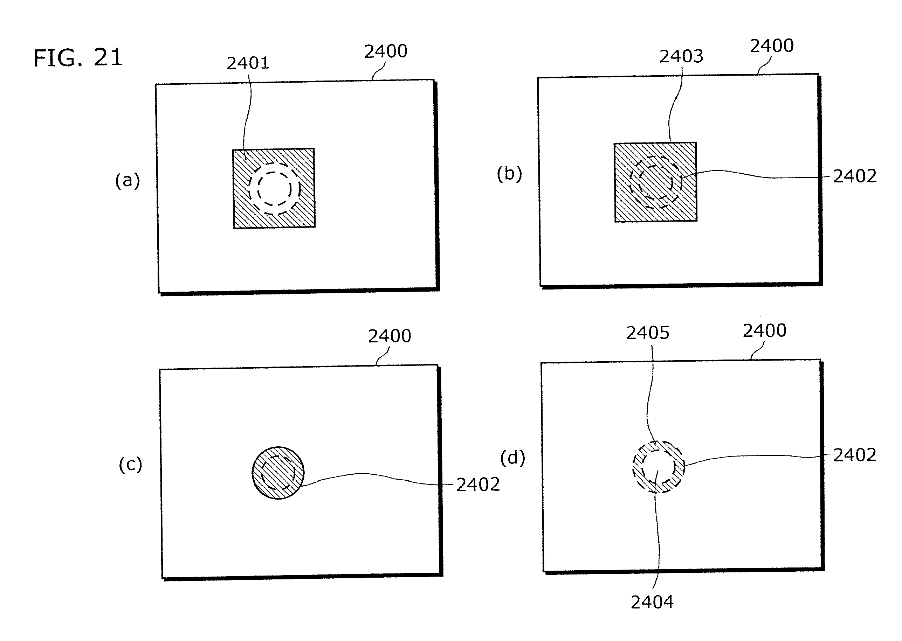

Again with reference to FIG. 14, the displacement estimator 2504 estimates a position of a region in the second image that corresponds to the enlarged region in the first image by searching the second image for an image region that matches the surrounding region that at least partially surrounds the enlarged region including a saturated region and a false color region (S2004). In other words, the displacement estimator 2504 performs the same processes as S510 to S540 in FIG. 5 using the enlarged region including the saturated region 2301 and the false color region 2302 in FIG. 17(a) instead of using the enlarged specular reflection region 420. In other words, the displacement estimator 2504 determines a cover region 2304 of an enlarged region 2303 in the first image 2300 as illustrated in FIG. 17(b). Furthermore, the displacement estimator 2504 determines a surrounding region 2305 obtained by removing the enlarged region 2303 from the cover region 2304 as illustrated in FIG. 17(c). The displacement estimator 2504 estimates a position of a region in the second image that corresponds to the surrounding region 2305 in the first image by searching the second image for an image region that matches the surrounding region 2305. FIG. 21(a) illustrates a surrounding region 2401 that matches the surrounding region 2305 in the first image 2300 and is an image region of a second image 2400. As illustrated in FIG. 21(b), the displacement estimator 2504 detects a cover region 2403 made up of a surrounding region 2401 and an enlarged region 2402 included in the surrounding region 2401. The displacement estimator 2504 may cut out the enlarged region 2402 in the second image 2400, from the cover region 2403 as illustrated in FIG. 21(c). As illustrated in FIG. 21(d), the displacement estimator 2504 determines, in the enlarged region 2402, a region 2404 corresponding to the saturated region 2301.

Again with reference to FIG. 14, the replacement unit 2505 replaces a pixel value of a pixel included in the saturated region 2301 of the first image 2300 that is detected by the process at S2001, with a pixel value of a pixel included in the region 2404 estimated by the process at S2004 (S2005). Here, this process of S2005 is the same as the replacement in FIG. 6. The replacement unit 2505 smoothes a pixel value of a transition region between the saturated region 2301 after the replacement in the first image 2300 and the false color region as in Embodiment 1.

With the processes in FIG. 14, the false color region included in the enlarged region of the first image can be compensated using a pixel value of another pixel in the first image, and the saturated region included in the enlarged region can be replaced with a pixel value of the corresponding region in the second image.

As described above, a false color region around a saturated region is determined based on change in pixel value of a blue component according to Embodiment 2. Thus, the boundary of the false color region can be more correctly identified than the method of determining the false color region only by thresholding the pixel value of the blue component.

Furthermore, a false color is compensated using a pixel value in the first image (target image) according to Embodiment 2. Thereby, the false color can be stably compensated when an object is viewed extremely different between frames.

Furthermore, a method and an apparatus for reducing the influence of saturated pixel values in an image can be provided according to Embodiment 2 as in Embodiment 1. In other words, a saturated region and a false color region in a target image are detected, and a reference image is searched for an appropriate replacement region by matching the surrounding region around the detected saturated region and false color region, with the reference image. Furthermore, the detected saturated region is replaced with a replacement region in a single reference image or in a plurality of reference images.

(Embodiment 3)

According to Embodiment 2, a false color region is interpolated using a pixel value in the same image. In contrast, a false color region is interpolated using a pixel value in another image according to Embodiment 3.

Although the following description mainly focuses on the differences with Embodiments 1 and 2, the description of the same processes as those in Embodiments 1 and 2 will be appropriately omitted.

The image to be processed in Embodiment 3 is a color image including RGB components, YUV components, or YCbCr components.

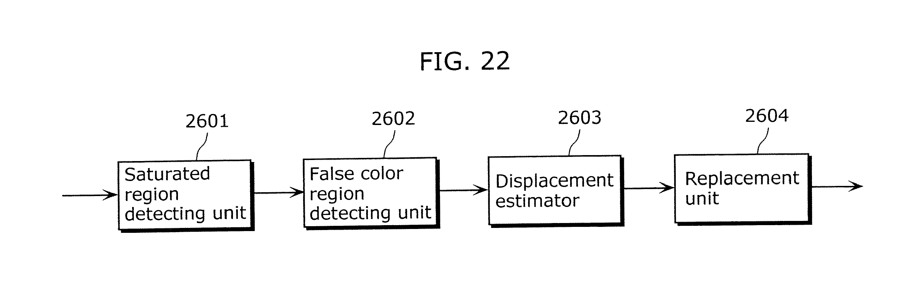

FIG. 22 is a block diagram illustrating a configuration of an image processing device according to Embodiment 3 in the present invention.

The image processing device according to Embodiment 3 includes a saturated region detecting unit 2601, a false color region detecting unit 2602, a displacement estimator 2603, and a replacement unit 2604.

The saturated region detecting unit 2601 detects a pixel region (saturated region) with saturated pixel values, from the first image (target image). The process performed by the saturated region detecting unit 2601 is the same as that performed by the saturated region detecting unit 2501 in Embodiment 2.

The false color region detecting unit 2602 detects, from the first image and as a false color region, a pixel region in which a blue false color appears around the saturated region with saturated pixel values. The process performed by the false color region detecting unit 2602 is the same as that performed by the false color region detecting unit 2502 in Embodiment 2.

The displacement estimator 2603 estimates a position of a region in the second image (reference image) that corresponds to the enlarged region in the first image by searching the second image for an image region that matches the surrounding region that at least partially surrounds the enlarged region including the saturated region and the false color region in the first image. The process performed by the displacement estimator 2603 is the same as that performed by the displacement estimator 2504 in Embodiment 2. Here, Embodiment 3 differs from Embodiment 2 in that while the image in which the false color region has been compensated is used as the first image in Embodiment 2, the image in which the false color region is not compensated is used as the first image in Embodiment 3.

The replacement unit 2604 replaces a pixel value of a pixel in a saturated region included in the enlarged region of the first image with a pixel value of a pixel in a region of the second image that is located at a position corresponding to a position of the saturated region in the first image, and replaces a pixel value of a blue component of a pixel in the false color region included in the enlarged region of the first image with a pixel value of a blue component of a pixel in a region of the second image that is located at a position corresponding to a position of the false color region in the first image.

The processes performed by the image processing device will be described hereinafter.

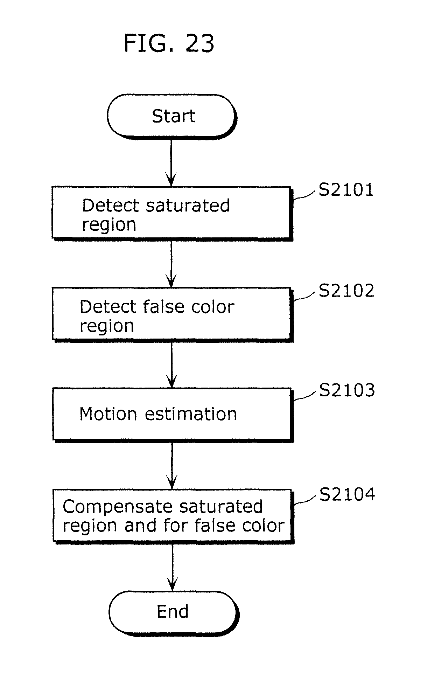

FIG. 23 is a flowchart of processes performed by the image processing device according to Embodiment 3 in the present invention.

The saturated region detecting unit 2601 detects a saturated region that is a pixel region with saturated pixel values, from the first image (S2101). The process at S2101 is the same as that at S2001 in FIG. 14.

The false color region detecting unit 2602 detects, from the first image and as a false color region, a pixel region in which a blue false color appears around the saturated region with saturated pixel values (S2102). The process at S2102 is the same as that at S2002 in FIG. 14.

The displacement estimator 2603 estimates a position of a region in the second image that corresponds to the enlarged region in the first image by searching the second image for an image region that matches the surrounding region that at least partially surrounds the enlarged region including the saturated region and the false color region in the first image (S2103). The process at S2103 is the same as that at S2004 in FIG. 14. Here, Embodiment 3 differs from Embodiment 2 in that while the image in which the false color region has been compensated is used as the first image in Embodiment 2, the image in which the false color region is not compensated is used as the first image in Embodiment 3. According to S2103, the regions 2404 and 2405 in the second image 2400 are estimated as illustrated in FIG.21(d), as positions in the second image 2400 that correspond to the saturated region 2301 and the false color region 2302 in the first image 2300 in FIG.17(a). The region 2404 is a region at a position corresponding to the saturated region 2301 when the enlarged region of the first image matches the enlarged region 2402. The region 2405 is a region at a position corresponding to the false color region 2302 when the enlarged region of the first image matches the enlarged region 2402.

The replacement unit 2604 replaces a pixel value of a pixel in the saturated region included in the enlarged region of the first image with a pixel value of a pixel in a region of the second image that is located at a position corresponding to a position of the saturated region in the first image, and replaces a pixel value of a blue component of a pixel in the false color region included in the enlarged region of the first image with a pixel value of a blue component of a pixel in a region of the second image that is located at a position corresponding to a position of the false color region in the first image (S2104). In other words, the replacement unit 2604 replaces a pixel value of the saturated region 2301 in the first image 2300 in FIG. 17(a) with a pixel value of the region 2404 in the second image 2400 in FIG. 21(d). Furthermore, the replacement unit 2604 replaces a pixel value of the false color region 2302 in the first image 2300 in FIG. 17(a) with a pixel value of the region 2405 in the second image 2400 in FIG. 21(d).

Here, the replacement unit 2604 smoothes a pixel value of a transition region between the saturated region 2301 and the false color region 2302 in the first image 2300 after the replacement as in Embodiment 1.

With the processes in FIG. 23, a pixel value of the enlarged region of the first image can be replaced with a pixel value of the corresponding region in the second image.

An image in a previous frame or a subsequent frame of the target image may be selected as the second image, with regard to the selection method.

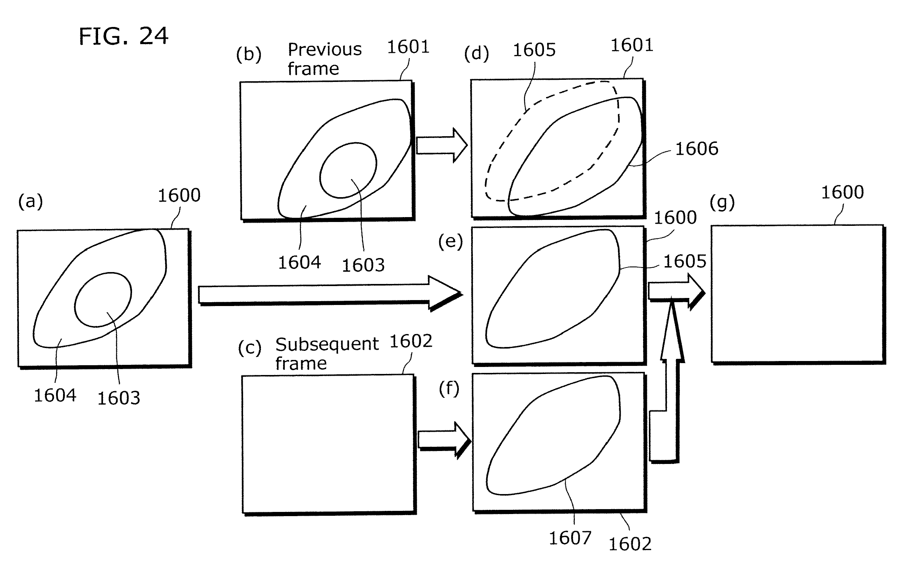

FIG. 24 illustrates a method of selecting the second image.

It is assumed that a previous frame image 1601 in FIG. 24(b) and a subsequent frame image 1602 in FIG. 24 (c) are obtained with respect to a target image 1600 in FIG. 24(a).

It is also assumed that each of the target image 1600 and the previous frame image 1601 includes a saturated region 1603 and a false color region 1604. It is also assumed that the subsequent frame image 1602 does not include the saturated region 1603 and the false color region 1604. FIG. 24(d) illustrates a position of an enlarged region 1605 in the target image 1600, and a position of a region 1606 in the previous frame image 1601 corresponding to the position of the enlarged region 1605. FIG. 24(e) illustrates the position of the enlarged region 1605 in the target image 1600. FIG. 24(f) illustrates a position of a region 1607 in the subsequent frame image 1602 that corresponds to the enlarged region 1605 of the target image 1600. The replacement unit 2604 replaces a pixel value in the enlarged region 1605, with a pixel value of the region 1606 or 1607. Here, the replacement unit 2604 replaces a pixel value in the enlarged region 1605, not with a pixel value of the region 1606 but with a pixel value of the region 1607. This is because the region 1606 includes the saturated region 1603 and the false color region 1604, and the saturated region 1603 and the false color region 1604 cannot be appropriately compensated even when the pixel value of the enlarged region 1605 is replaced with the pixel value in the region 1606. In contrast, the region 1607 includes none of the saturated region 1603 and the false color region 1604. Thus, the saturated region 1603 and the false color region 1604 can be appropriately compensated by replacing the pixel value of the enlarged region 1605 with the pixel value in the region 1607. The replacement unit 2604 replaces a pixel value of the enlarged region 1605 in the target image 1600 in FIG. 24(e) with a pixel value of the region 1607 in the subsequent frame image 1602 in FIG. 24(f). Thus, the image that does not include the saturated region 1603 and the false color region 1604 as illustrated in FIG. 24(g) can be obtained. For example, when the criteria, for example, that (i) the number of pixels included in a saturated region within a region to be replaced is equal to or smaller than a predetermined threshold of saturated pixels and (ii) the number of pixels included in a false color region within the same region is equal to or smaller than a predetermined threshold of false color pixels are satisfied, it may be determined that the second image is used. Furthermore, when no second image in a frame adjacent to the target image is found, the second image may be selected from previous and subsequent frame images of the target image by gradually increasing the number of frames, that is, adding subsequent two frames and then subsequent three frames.

As described above, a false color region around a saturated region is determined based on change in pixel value of a blue component. Thus, the boundary of the false color region can be more correctly identified than the method of determining the false color region only by thresholding the pixel value of the blue component.

Furthermore, a method and an apparatus for reducing the influence of a false color and saturated pixel values in an image can be provided according to Embodiment 3. In other words, a saturated region and a false color region are detected in a target image, and a reference image is searched for an appropriate replacement region by matching the surrounding region of the detected saturated region and false color region with the reference image. Furthermore, the detected saturated region and false color region are replaced with respective replacement regions in a single reference image or in a plurality of reference images.

(Embodiment 4)

In Embodiment 3, compensation of a saturated region and compensation of a false color region are simultaneously performed. Embodiment 4 differs from Embodiment 3 in that the saturated region is compensated after compensating the false color region.

Although the following description mainly focuses on the differences with Embodiments 1 to 3, the description of the same processes as those in Embodiments 1 to 3 will be appropriately omitted.

The image to be processed in Embodiment 4 is a color image including RGB components, YUV components, or YCbCr components.

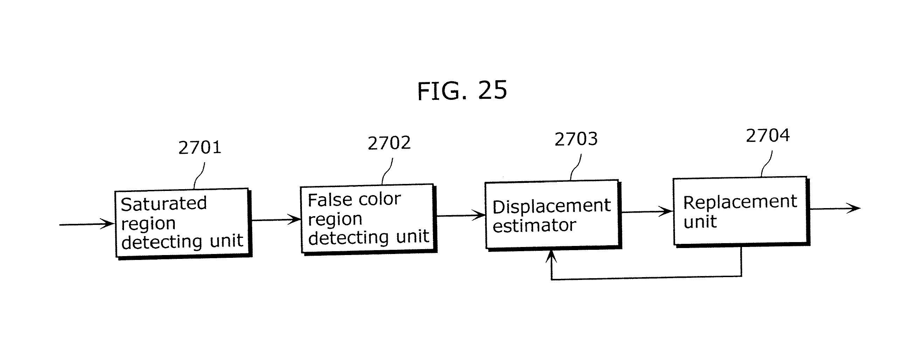

FIG. 25 is a block diagram illustrating a configuration of an image processing device according to Embodiment 4 in the present invention.

The image processing device according to Embodiment 4 includes a saturated region detecting unit 2701, a false color region detecting unit 2702, a displacement estimator 2703, and a replacement unit 2704.

The saturated region detecting unit 2701 detects a pixel region (saturated region) with saturated pixel values, from the first image (target image). The process performed by the saturated region detecting unit 2701 is the same as that performed by the saturated region detecting unit 2501 in Embodiment 2.

The false color region detecting unit 2702 detects, from the first image and as a false color region, a pixel region in which a blue false color appears around the saturated region with saturated pixel values. The process performed by the false color region detecting unit 2702 is the same as that performed by the false color region detecting unit 2502 in Embodiment 2.

The displacement estimator 2703 estimates a position of a region in the second image (reference image) that corresponds to the enlarged region in the first image by searching the second image for an image region that matches the surrounding region that at least partially surrounds the enlarged region including the saturated region and the false color region in the first image. Furthermore, the displacement estimator 2703 estimates a position of a region in the second image by searching the second image for an image region that matches the surrounding region that at least partially surrounds the enlarged region including the saturated region and the adjacent region obtained by enlarging the saturated region. The former process is the same as that performed by the displacement estimator 2504 in Embodiment 2. In the former process, an image in which a false color region is not compensated is used as the first image is used as the first image. The latter process is the same as that performed by the displacement estimator 1120 in Embodiment 1. In the latter process, an image in which the false color region has been compensated is used as the first image.

The replacement unit 2704 replaces a pixel value of a blue component of a pixel in a false color region included in the enlarged region of the first image with a pixel value of a blue component of a pixel in a region of the second image that is located at a corresponding position of the false color region in the first image. After the replacement, the replacement unit 2704 replaces a pixel value of a pixel in a saturated region included in the enlarged region of the first image with a pixel value of a pixel in a region of the second image that is located at a position corresponding to the position of the saturated region in the first image. The first replacement is performed on a result of the estimation by the displacement estimator 2703, using the image in which a false color region is not compensated as the first image. The second replacement is performed on a result of the estimation by the displacement estimator 2703 using the image in which the false color region has been compensated as the first image.

The processes performed by the image processing device will be described hereinafter.

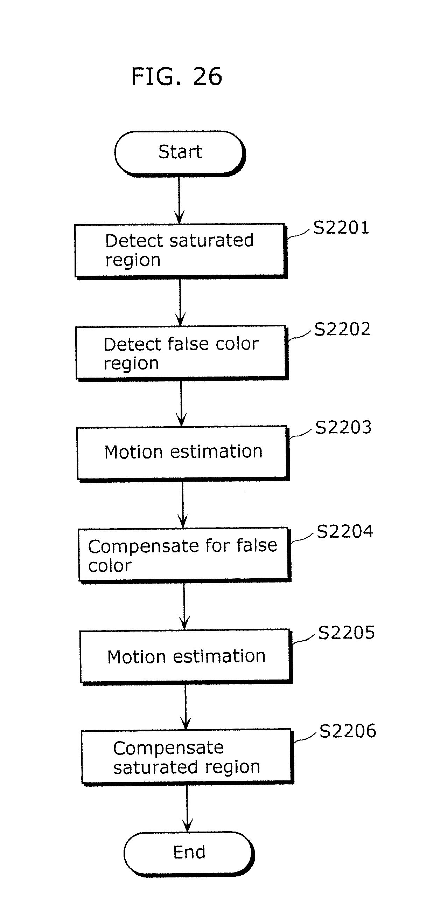

FIG. 26 is a flowchart of processes performed by the image processing device according to Embodiment 4 in the present invention.

The saturated region detecting unit 2701 detects a saturated region that is a pixel region with saturated pixel values, from the first image (S2201). The process at S2201 is the same as that at S2001 in FIG. 14.

The false color region detecting unit 2702 detects, from the first image and as a false color region, a pixel region in which a blue false color appears around the saturated region with saturated pixel values (S2202). The process at S2202 is the same as that at S2002 in FIG. 14.

The displacement estimator 2703 estimates a position of a region in the second image that corresponds to the enlarged region in the first image by searching the second image for an image region that matches the surrounding region that at least partially surrounds the enlarged region including the saturated region and the false color region in the first image (S2203). The process at S2203 is the same as that at S2103 in FIG. 23.

The replacement unit 2704 replaces a pixel value of a blue component of a pixel in a false color region included in the enlarged region of the first image with a pixel value of a blue component of a pixel in a region of the second image that is located at a position corresponding to the false color region in the first image (S2204). In other words, the replacement unit 2704 replaces a pixel value of the false color region 2302 in the first image 2300 in FIG. 17(a) with a pixel value of the region 2405 in the second image 2400 in FIG. 21(d). Here, the replacement unit 2704 smoothes a pixel value of a transition region between the saturated region 2301 and the false color region 2302 in the first image 2300 after the replacement as in Embodiment 1.

The displacement estimator 2703 estimates a position of a region in the second image that corresponds to the enlarged region in the first image by searching the second image for an image region that matches the surrounding region that at least partially surrounds the enlarged region including the saturated region and the adjacent region of the saturated region, in the first image in which the false color region has been compensated in the process at S2204 (S2205). The process at S2205 is the same as that at S2203 except that the image in which the false color region has been compensated is used as the first image and the enlarged region and the surrounding region are different from those at S2203.

The replacement unit 2704 replaces a pixel value of a pixel in a saturated region included in the enlarged region of the first image in which the false color region has been compensated, with a pixel value of a pixel at a position of a region in the second image that corresponds to the saturated region in the first image. In other words, the replacement unit 2704 replaces a pixel value of the saturated region 2301 in the first image 2300 in FIG. 17(a) with a pixel value of the region 2404 in the second image 2400 in FIG. 21(d). The process at S2206 is performed on a result of the estimation at S2205. The replacement unit 2704 smoothes a pixel value of a transition region between the saturated region 2301 and the adjacent region after the replacement in the first image 2300 as in Embodiment 1.

With the processes in FIG. 26, a pixel value of the enlarged region of the first image can be replaced with a pixel value of the corresponding region in the second image.

With regard to the selection method when the process at S2204 is performed, an image in a previous frame or a subsequent frame of the target image may be selected as the second image.

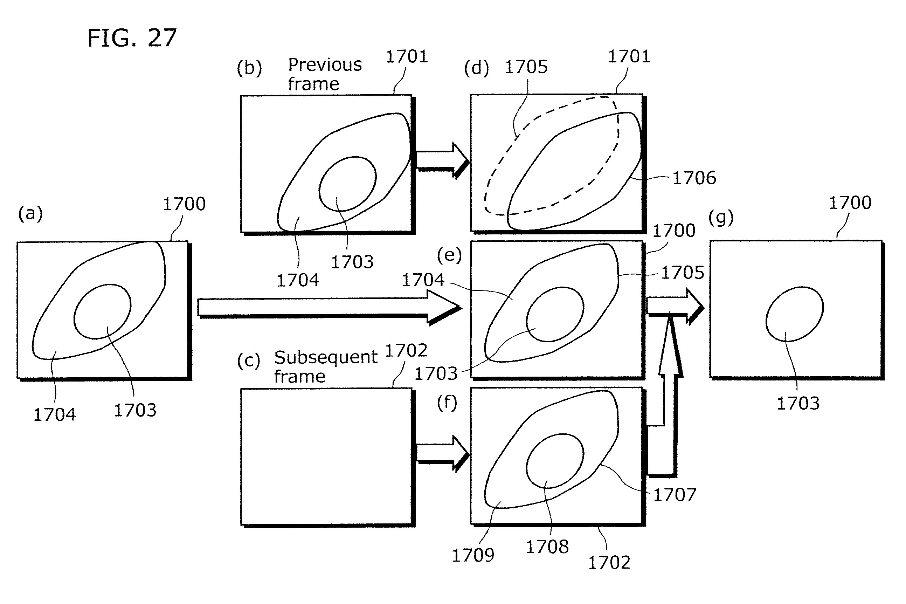

FIG. 27 illustrates a method of selecting the second image.

It is assumed that a previous frame image 1701 in FIG. 27(b) and a subsequent frame image 1702 in FIG. 27 (c) are obtained with respect to a target image 1700 in FIG. 27(a).

It is assumed that each of the target image 1700 and the previous frame image 1701 includes a saturated region 1703 and a false color region 1704. It is also assumed that the subsequent frame image 1702 includes none of the saturated region 1703 and the false color region 1704. FIG. 27(d) illustrates a position of an enlarged region 1705 in the target image 1700, and a position of a region 1706 in the previous frame image 1701 corresponding to the position of the enlarged region 1705. FIG. 27(e) illustrates the position of the enlarged region 1705 (the saturated region 1703 and the false color region 1704) in the target image 1700. FIG. 27(f) illustrates positions of a region 1707, a region 1708, and a region 1709 in the subsequent frame image 1702 respectively corresponding to the enlarged region 1705, the saturated region 1703, and the false color region 1704 in the target image 1700. In the process at S2204, the replacement unit 2704 replaces a pixel value in the false color region 1704 with a pixel value in the region 1706 that is located at a corresponding position of the false color region 1704 or with a pixel value in the region 1707 (pixel value in the region 1709) that is located at a corresponding position of the false color region 1704. Here, the replacement unit 2704 replaces a pixel value within the false color region 1704, not with a pixel value of the region 1706 but with a pixel value of the region 1707. This is because the region 1706 includes the saturated region 1703 and the false color region 1704, and the saturated region 1703 cannot be appropriately compensated even when the pixel value of the false color region 1704 is replaced with the pixel value within the region 1706. In contrast, the region 1707 includes none of the saturated region 1703 and the false color region 1704. Thus, the false color region 1704 can be appropriately compensated by replacing the pixel value of the false color region 1704 with the pixel value within the region 1707. The replacement unit 2704 replaces a pixel value of the false color region 1704 in the target image 1700 in FIG. 27(e) with a pixel value of the region 1709 in the subsequent frame image 1702 in FIG. 27(f). Thus, the image that does not include the false color region 1704 as illustrated in FIG. 24(g) can be obtained. For example, when the criteria, for example, that (i) the number of pixels included in a saturated region within a region to be replaced is equal to or smaller than a predetermined threshold of saturated pixels and (ii) the number of pixels included in a false color region within the same region is equal to or smaller than a predetermined threshold of false color pixels are satisfied, the second image may be used. Furthermore, when no second image in a frame adjacent to the target image is found, the second image may be selected from previous and subsequent frames of the target image by gradually increasing the number of frames, that is, adding subsequent two frames and then subsequent three frames.

As described above, a false color region around a saturated region is determined based on change in pixel value of a blue component. Thus, the boundary of the false color region can be more correctly identified than the method of determining the false color region only by thresholding the pixel value of the blue component.

Furthermore, a method and an apparatus for reducing the influence of a false color and saturated pixel values in an image can be provided according to Embodiment 4. In other words, a saturated region and a false color region in a target image are detected, and a reference image is searched for an appropriate replacement region by matching the surrounding region of the detected saturated region and false color region with the reference image. Furthermore, the detected false color region is replaced with a replacement region in a single reference image or in a plurality of reference images. Furthermore, a saturated region in a target image is again detected after the replacement of the false color region, and a reference image is searched for an appropriate replacement region by matching the surrounding region of the detected saturated region with the reference image. Furthermore, the detected saturated region is replaced with a replacement region in a single reference image or in a plurality of reference images.

Although a false color region and a saturated region are compensated in Embodiments 2 to 4, only the false color region may be compensated without compensating the saturated region. This is because there is a case where in a portion of an image captured with a background of sky, such as the region 1800 in FIG. 19, preventing compensation of a saturated region is more natural than compensating the saturated region as in the specular reflection.

The method described in Embodiment 1 is applicable to images captured by ordinary cameras, other than images captured by endoscopes. In addition, the methods described in Embodiments 2 to 4 are applicable to images captured by endoscopes.

Other embodiments of the present invention relate to implementation of various Embodiments herein using hardware and software. The various Embodiments of the present invention should be implemented or performed using a computer device (processor). The examples of the computer device or the processor may be a general purpose processor, a digital signal processor (DSP), an application-specific integrated circuit (ASIC), a Field Programmable Gate Array (FPGA), and other programmable logic devices. Furthermore, the various Embodiments of the present invention may be implemented or performed by combining these devices.

Furthermore, the various Embodiments of the present invention may be implemented using a software module means executed in a processor or directly executed in hardware. Moreover, the software module may be combined with hardware implementations. The software module may be stored on any kind of computer readable storage media, for example, a RAM, an EPROM, an EEPROM, a flash memory, a register, a hard disk, a CD-ROM, and a DVD.

In summary, a method and an apparatus for reducing the effect of specular reflections in an image can be provided according to the present invention. More specifically, a specular reflection region in a target image is detected, and the specular reflection region is at least partially replaced with an image region in a single reference image or in a plurality of reference images. Furthermore, provided is the displacement estimating technique, that is, a technique of searching a reference image for an appropriate replacement region by matching the surrounding region of the detected specular reflection region with the reference image. Such a specular reflection compensation mechanism has an advantage that the setup for capturing images is independent from others.

[Industrial Applicability]

The present invention is applicable to a specular reflection compensator that compensates for specular reflection in an image captured by an endoscope, an image processing device that compensates a specular reflection region, a saturated region, or a false color region that is captured by an ordinary camera, and others.

[Reference Signs List]

| 1100 | Specular reflection compensator |
| 1101, 1131 | Image signal |
| 1110 | Specular reflection detector |
| 1111 | Result of detection |
| 1120, 2504, 2603, 2703 | Displacement estimator |
| 1121 | Output |
| 1130, 2505, 2604, 2704 | Replacement unit |
| 1210 | Flexible arm |
| 1215 | Distal end |
| 1220 | Light source |
| 1225 | Optic fibre |
| 1250 | Endoscope body |

| 1251 | Interface |
|------|-----------|
| 1252 | Connector |
| 1270 | Display device |
| 1280 | Multifunctional processing device |
| 2501, 2601, 2701 | Saturated region detecting unit |
| 2502, 2602, 2702 | False color region detecting unit |
| 2503 | False color compensating unit |

**Claims**

1. An image processing method, comprising:

   detecting, in a first image, an enlarged region including a saturated region and an adjacent region, the saturated region being a pixel region having a pixel value equal to or larger than a predetermined threshold, and the adjacent region at least partially surrounding the saturated region; and
   replacing a pixel value of a pixel included at least in the adjacent region, with one of (i) a pixel value of a pixel in a region of a second image that is located at a position corresponding to a position of the enlarged region in the first image and (ii) a pixel value of a pixel adjacent to the pixel in the second image, the adjacent region being included in the enlarged region detected in said detecting.

2. The image processing method according to Claim 1, further comprising
   estimating the corresponding position of the region in the second image by searching the second image for an image region that matches a surrounding region that at least partially surrounds the enlarged region detected in said detecting,
   wherein in said replacing, the pixel value of the pixel included at least in the adjacent region is replaced with a pixel value of a pixel at the corresponding position of the region in the second image estimated in said estimating.

3. The image processing method according to Claim 2,
   wherein said estimating includes:

   determining the surrounding region that at least partially surrounds the enlarged region detected in said detecting;
   searching, based on predetermined criteria, the second image for an appropriate image region to be replaced with the enlarged region in the first image, the image region matching the surrounding region and satisfying the predetermined criteria; and
   selecting a position that best matches a predetermined measure from the image region obtained in said searching, as the corresponding position of the region in the second image.

4. The image processing method according to Claim 3,
   wherein the predetermined criteria include at least one of an amount of saturated pixels in the image region, mean brightness of the image region, an amount of spatial information of the image region, frequency information of the image region, an amount of structure of the image region, an amount of edges in the image region, an amount of texture of the image region, an amount of noise of the image region, smoothness of a transition region between the image region and the detected surrounding region, a temporal distance between the first image and the second image, and a spatial distance between the enlarged region in the first image and the appropriate image region in the second image to be replaced with the enlarged region in the first image, the image region being obtained in said searching.

5. The image processing method according to one of Claims 2 to 4,
   wherein said estimating is performed using, as the second image, one of images of a video sequence or a plurality of images including images captured by a plurality of cameras.

6. The image processing method according to one of Claims 2 to 5,
   wherein further in said replacing, a pixel value of a pixel included in a transition region between the enlarged region and the surrounding region in the first image is smoothed, the enlarged region and the surrounding region being obtained in said replacing.

7. The image processing method according to one of Claims 1 to 6,

wherein in said detecting, a pixel region with saturated pixel values is determined as the saturated region in the first image.

8. The image processing method according to one of Claims 1 to 6,
wherein said detecting includes:

classifying, in the first image, pixels each having the pixel value equal to or larger than the predetermined threshold, as saturated pixels; and
identifying the saturated region by grouping the pixels classified as the saturated pixels in said classifying, the pixels being adjacent to each other.

9. The image processing method according to one of Claims 1 to 8,
wherein the adjacent region is a false color region that is a region in which a false color appears around the saturated region.

10. The image processing method according to Claim 9,
wherein in said replacing, a pixel value of a pixel in the saturated region is replaced with a pixel value of a pixel in a region of the second image that is located at a position corresponding to a position of the saturated region in the first image, and a pixel value of a blue component of a pixel in the false color region is replaced with a pixel value of a blue component of a pixel in a region of the second image that is located at a position corresponding to a position of the false color region in the first image, the saturated region and the false color region being included in the enlarged region detected in said detecting.

11. The image processing method according to Claim 9,
wherein in said replacing, a pixel value of a blue component of a pixel in the false color region is replaced with a pixel value of a blue component of a pixel in a region of the second image that is located at a position corresponding to a position of the false color region in the first image, and after the replacing, a pixel value of a pixel in the saturated region is replaced with a pixel value of a pixel in a region of the second image that is located at a position corresponding to a position of the saturated region in the first image, the false color region and the saturated region being included in the enlarged region detected in said detecting, and
further in said detecting, the enlarged region including the saturated region and the adjacent region is detected in the first image after replacing the pixel value of the blue component of the pixel in the false color region and before replacing the pixel value of the pixel in the saturated region in said replacing, the saturated region being the pixel region having the pixel value equal to or larger than the predetermined threshold, and the adjacent region at least partially surrounding the saturated region.

12. The image processing method according to Claim 1,
wherein the adjacent region is a false color region that is a region in which a false color appears around the saturated region,
the first image is identical to the second image, and
in said replacing, a pixel value of a blue component of a pixel in the adjacent region included in the enlarged region is replaced by performing interpolation using a pixel value of a blue component outside of a region in the second image that corresponds to the adjacent region in the first image, the enlarged region being detected in said detecting.

13. The image processing method according to Claim 12, further comprising
estimating a position of a region in a third image that is located at a position corresponding to the position of the enlarged region in the first image by searching the third image for an image region that matches a surrounding region that at least partially surrounds the enlarged region detected in said detecting,
wherein in said replacing, a pixel value of a pixel included in the saturated region is replaced with a pixel value of a pixel in the region of the third image that is located at the corresponding position estimated in said estimating, the saturated region being included in the enlarged region detected in said detecting.

14. The image processing method according to one of Claims 9 to 13,
wherein further in said detecting, when a pixel value of a blue component in each pixel included in a region around the saturated region is tracked in a direction distant from a boundary of the saturated region and after the pixel value becomes local maximum, the false color region is determined by determining a position at which the pixel value is equal to or smaller than a predetermined value, as a boundary position of the false color region.

**15.** An image processing device, comprising:

a detecting unit configured to detect, in a first image, an enlarged region including a saturated region and an adjacent region, the saturated region being a pixel region having a pixel value equal to or larger than a predetermined threshold, and the adjacent region at least partially surrounding the saturated region; and
a replacement unit configured to replace a pixel value of a pixel included at least in the adjacent region, with one of (i) a pixel value of a pixel in a region of a second image that is located at a position corresponding to a position of the enlarged region in the first image and (ii) a pixel value of a pixel adjacent to the pixel in the second image, the adjacent region being included in the enlarged region detected by said detecting unit.

**16.** A program causing a computer to execute the image processing method according to one of Claims 1 to 14.

FIG. 1

# FIG. 2

```
( Specular reflection compensation )
                    │
                    ▼
┌─────────────────────────────┐  ─ S300
│ Detect specular reflection  │
│ image region                │
└─────────────────────────────┘
                    │
                    ▼
┌─────────────────────────────┐  ─ S500
│ Displacement estimation     │
└─────────────────────────────┘
                    │
                    ▼
┌─────────────────────────────┐  ─ S700
│ Replace specular            │
│ reflection image region     │
└─────────────────────────────┘
```

# FIG. 3

```
( Detect specular            )  ─ S300
( reflection image region    )
                    │
                    ▼
┌─────────────────────────────┐  ─ S310
│ Detect saturated pixels     │
└─────────────────────────────┘
                    │
                    ▼
┌─────────────────────────────┐  ─ S320
│ Identify saturated image    │
│ region                      │
└─────────────────────────────┘
                    │
                    ▼
┌─────────────────────────────┐  ─ S330
│ Dilate                      │
└─────────────────────────────┘
                    │
                    ▼
┌ ─ ─ ─ ─ ─ ─ ─ ─ ─ ─ ─ ─ ─ ─ ┐
│ Store detected region       │
└ ─ ─ ─ ─ ─ ─ ─ ─ ─ ─ ─ ─ ─ ─ ┘
```

FIG. 4

(a) 400

410($\sigma$)

(b) 400

420(S)

(c)

430($\widetilde{S}$)

420(S)

(d)

440(D)

EP 2 503 774 A1

# FIG. 5

Displacement estimation — S500

Determine surrounding region for specular refection region — S510

Next image? — S520

no

yes

Search next image for best match for surrounding region — S530

Store best matching region in candidate set — S540

FIG. 6

Replace specular reflection region — S700

↓

Evaluate suitability of candidate — S710

↓

Select best candidate — S720

↓

Adapt transition region — S730

↓

Replace specular reflection region with adapted best candidate — S740

FIG. 7

(a)

600

610(D')

(b)

630($\widetilde{S}'$)

620(S')

(c)

640(S')

EP 2 503 774 A1

FIG. 8

800

850(T)

830

820(S')

810(D)

EP 2 503 774 A1

# FIG. 9

FIG. 10

EP 2 503 774 A1

FIG. 11

1101 1110 1111 1120 1121 1130 1131

Specular reflection detector

Displacement estimator

Replacement unit

1100

EP 2 503 774 A1

FIG. 12

EP 2 503 774 A1

FIG. 13

EP 2 503 774 A1

2501

Saturated region detecting unit

2502

False color region detecting unit

2503

False color compensating unit

2504

Displacement estimator

2505

Replacement unit

# FIG. 14

```
        ┌──────────┐
        │  Start   │
        └────┬─────┘
             │
             ▼
   ┌─────────────────────┐
   │ Detect saturated    │──── S2001
   │ region              │
   └──────────┬──────────┘
              │
              ▼
   ┌─────────────────────┐
   │ Detect false color  │──── S2002
   │ region              │
   └──────────┬──────────┘
              │
              ▼
   ┌─────────────────────┐
   │ Compensate for      │──── S2003
   │ false color         │
   └──────────┬──────────┘
              │
              ▼
   ┌─────────────────────┐
   │ Motion estimation   │──── S2004
   └──────────┬──────────┘
              │
              ▼
   ┌─────────────────────┐
   │ Compensate          │──── S2005
   │ saturated region    │
   └──────────┬──────────┘
              │
              ▼
        ┌──────────┐
        │   End    │
        └──────────┘
```

FIG. 15

(a)          (b)          (c)          (d)

1300         1300     1306  1305  1300         1300

1302  1301   1303  1304   1303  1304   1307  1302

EP 2 503 774 A1

## FIG. 16

Surrounding region | False color region | Saturated region | False color region | Surrounding region

Original Y

Original Cb

Interpolated

1712

1711

1704A

1703A

1703B

1704B

FIG. 17

(a)

2302　2301　2300

(b)

2300

2304

2303

(c)

2300

2305

EP 2 503 774 A1

FIG. 18

(a)

1400

1401

1402

1403

y

x

(b)

1400          1403

1404

1406

1405

(c)

1400

1401

EP 2 503 774 A1

FIG. 19

(a) 1800

(b) 1803 1801 1802

(c) 1806 1804 1805

EP 2 503 774 A1

FIG. 20

(a) 1900

(b) 1901

1902

(c) 1903

1904

EP 2 503 774 A1

FIG. 21

(a) 2401 2400

(b) 2403 2400 — 2402

(c) 2400 — 2402

(d) 2405 2400 — 2402
2404

EP 2 503 774 A1

FIG. 22

EP 2 503 774 A1

```
        2601              2602              2603              2604

  ┌──────────────┐  ┌──────────────┐  ┌──────────────┐  ┌──────────────┐
  │ Saturated    │  │ False color  │  │ Displacement │  │ Replacement  │
─▶│ region       ├─▶│ region       ├─▶│ estimator    ├─▶│ unit         ├─▶
  │ detecting unit│  │ detecting unit│  │              │  │              │
  └──────────────┘  └──────────────┘  └──────────────┘  └──────────────┘
```

# FIG. 23

```
        ┌──────────┐
        │  Start   │
        └────┬─────┘
             │
             ▼
   ┌─────────────────────┐  ⟋ S2101
   │ Detect saturated    │
   │ region              │
   └──────────┬──────────┘
              │
              ▼
   ┌─────────────────────┐  ⟋ S2102
   │ Detect false color  │
   │ region              │
   └──────────┬──────────┘
              │
              ▼
   ┌─────────────────────┐  ⟋ S2103
   │ Motion estimation   │
   └──────────┬──────────┘
              │
              ▼
   ┌─────────────────────┐  ⟋ S2104
   │ Compensate saturated│
   │ region and for false│
   │ color               │
   └──────────┬──────────┘
              │
              ▼
        ┌──────────┐
        │   End    │
        └──────────┘
```

FIG. 24

EP 2 503 774 A1

## FIG. 25

Saturated region detecting unit (2701) → False color region detecting unit (2702) → Displacement estimator (2703) → Replacement unit (2704)

EP 2 503 774 A1

# FIG. 26

```
        ┌─────────────┐
        │    Start     │
        └─────────────┘
               │
               ▼
   ┌─────────────────────┐    S2201
   │ Detect saturated    │
   │ region              │
   └─────────────────────┘
               │
               ▼
   ┌─────────────────────┐    S2202
   │ Detect false color  │
   │ region              │
   └─────────────────────┘
               │
               ▼
   ┌─────────────────────┐    S2203
   │ Motion estimation   │
   └─────────────────────┘
               │
               ▼
   ┌─────────────────────┐    S2204
   │ Compensate for false│
   │ color               │
   └─────────────────────┘
               │
               ▼
   ┌─────────────────────┐    S2205
   │ Motion estimation   │
   └─────────────────────┘
               │
               ▼
   ┌─────────────────────┐    S2206
   │ Compensate          │
   │ saturated region    │
   └─────────────────────┘
               │
               ▼
        ┌─────────────┐
        │     End      │
        └─────────────┘
```

FIG. 27

(a) 1700

1704  1703

(b) Previous frame 1701

1704  1703

(d) 1705  1701

1706

(c) Subsequent frame 1702

(e) 1700

1704  1705

1703

(f) 1702

1707

1709  1708  1702

(g) 1700

1703

EP 2 503 774 A1

## INTERNATIONAL SEARCH REPORT

International application No.

PCT/JP2010/006776

A. CLASSIFICATION OF SUBJECT MATTER
*H04N5/243*(2006.01)i, *H04N5/232*(2006.01)i

According to International Patent Classification (IPC) or to both national classification and IPC

B. FIELDS SEARCHED

Minimum documentation searched (classification system followed by classification symbols)
H04N5/243, H04N5/232

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 11-151203 A  (Olympus Optical Co., Ltd.),<br>08 June 1999 (08.06.1999),<br>claims<br>(Family: none) | 1-10,15,16<br>11-14 |
| Y<br>A | JP 8-149498 A  (Canon Inc.),<br>07 June 1996 (07.06.1996),<br>claims<br>& US 6040858 A       & EP 713342 A2<br>& DE 69526483 T2 | 1-10,15,16<br>11-14 |
| Y<br>A | JP 2009-522869 A  (Microsoft Corp.),<br>11 June 2009 (11.06.2009),<br>claims; paragraph [0035]<br>& US 2007/0153341 A1    & WO 2007/079039 A2<br>& KR 10-2008-0080107 A  & CN 101366019 A | 1-10,15,16<br>11-14 |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>09 February, 2011 (09.02.11) | Date of mailing of the international search report<br>22 February, 2011 (22.02.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2010/006776

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2005-151495 A  (Konica Minolta Photo Imaging, Inc.), 09 June 2005 (09.06.2005), claims; paragraph [0043] (Family: none) | 2-14 |
| A | JP 2006-157342 A  (Matsushita Electric Industrial Co., Ltd.), 15 June 2006 (15.06.2006), paragraphs [0044] to [0051] (Family: none) | 2-14 |
| A | JP 2008-109176 A  (Sanyo Electric Co., Ltd.), 08 May 2008 (08.05.2008), paragraphs [0005] to [0007], [0054] to [0057] & US 2008/0095408 A1 | 2-14 |
| A | JP 2003-244719 A  (Fujifilm Microdevices Co., Ltd.), 29 August 2003 (29.08.2003), paragraphs [0024], [0025] (Family: none) | 6-14 |
| X | JP 2006-148743 A  (Seiko Epson Corp.), 08 June 2006 (08.06.2006), paragraphs [0009] to [0016], [0024] (Family: none) | 1,15,16 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6088612 A
- US 20080165266 A

- US 7265902 B

### Non-patent literature cited in the description

- Mathematical Models in Computer Vision: The Handbook. **D.J. FLEET ; Y. WEISS et al.** Optical Flow Estimation. Springer, 2005, 239-258